# EUROPÄISCHE PATENTSCHRIFT

(11) **EP 2 503 878 B1**
(45) Veröffentlichungstag und Bekanntmachung des Hinweises auf die Patenterteilung: **28.01.2015**
(21) Anmeldenummer: 10781507.8
(22) Anmeldetag: 23.11.2010
(51) Int. Cl.: A01N 25/30, A01N 47/02, A01N 47/24, C08G 18/32, C08G 18/80

(54) **DENDRITISCHER POLYHARNSTOFF ZUR SOLUBILISIERUNG SCHWERLÖSLICHER WIRKSTOFFE**
DENDRITIC POLYUREA FOR SOLUBILIZING ACTIVE SUBSTANCES OF LOW SOLUBILITY
POLYURÉE DENDRITIQUE POUR LA SOLUBILISATION DE SUBSTANCES ACTIVES DIFFICILEMENT SOLUBLES

(30) Priorität: 27.11.2009 EP 09177370
(43) Veröffentlichungstag der Anmeldung: 03.10.2012
(73) Patentinhaber: BASF SE, 67056 Ludwigshafen (DE)
(72) Erfinder: TÜRK, Holger, 68161 Mannheim (DE); HABERECHT, Monika, 67063 Ludwigshafen (DE); YAMADA, Hiroe, 66111 Saarbrücken (DE); BRUCHMANN, Bernd, 67251 Freinsheim (DE); SCHÖNFELDER, Daniel, B-1000 Bruxelles (BE); ISHAQUE, Michael, 68165 Mannheim (DE)
(86) Internationale Anmeldenummer: PCT/EP2010/067978
(87) Internationale Veröffentlichungsnummer: WO 2011/064185

(56) Entgegenhaltungen:
- WO-A1-2005/075541
- WO-A1-2007/125028
- WO-A2-2006/087227
- WO-A2-2007/135384
- WO-A2-2009/007328
- DE-A1- 2 910 356

## Beschreibung

Gegenstand der vorliegenden Erfindung ist eine Zusammensetzung enthaltend ein Amphiphil und einen Wirkstoff, der in Wasser bei 20 °C zu höchstens 10 g/L löslich ist. Die Erfindung betrifft auch ein Amphiphil enthaltend einen dendritischen Polyharnstoff und ein Verfahren zur Herstellung des Amphiphils. Kombinationen bevorzugter Merkmale mit anderen bevorzugten Merkmalen werden von der vorliegenden Erfindung umfasst.

In vielen Fällen ist es erforderlich, hydrophobe Wirkstoffe in Wasser zu solubilisieren, ohne den betreffenden Wirkstoff als solchen chemisch zu verändern. Dazu ist es beispielsweise möglich, eine Emulsion herzustellen, wobei sich der betreffende Wirkstoff in der Ölphase der Emulsion befindet. Bei vielen pharmazeutischen Wirkstoffen oder insbesondere Pflanzenschutzmitteln, insbesondere bei solchen, die mit einer Körperflüssigkeit bzw. in einem Pflanzensaft transportiert werden sollen, ist ein derartiges Vorgehen jedoch nicht möglich. Unter der Einwirkung von hohen Scherkräften können Emulsionen brechen. Außerdem ist eine Sterilisierung unter Erhalt der Emulsion in vielen Fällen nicht möglich.

Zusammensetzungen enthaltend einen Wirkstoff und ein Amphiphil basierend auf einem Polyharnstoff sind allgemein bekannt: WO2006/087227 offenbart eine Wirkstoffzusammensetzung enthaltend ein stickstoffatomhaltiges hyperverzweigtes Polymer und einen Wirkstoff, der in Wasser bei 25 °C einen Löslichkeit von unterhalb 10 g/l aufweist. Geeignete hyperverzweigte Polymere sind Polyharnstoffe, welche einer polymeranalogen Reaktion mit niedermolekularen Verbindungen oder mit Polyetherolen unterzogen werden können. Die polymeranaloge Reaktion erfolgt dabei jeweils direkt mit dem hyperverzweigten Polymer. WO 2009/021986 offenbart eine Saatgutbeize umfassend einen Wirkstoff und ein hyperverzweigtes Polymer, welches beispielsweise ein hyperverzweigter Polyharnstoff sein kann. Die hyperverzweigten Polymere können entweder mit Alkylenoxiden alkoxyliert oder aber direkt mit Polyetheralkoholen umgesetzt werden.

Hyperverzweigte Polyharnstoffe sind allgemein bekannt und Herstellverfahren im Detail beschrieben, beispielsweise in WO 2003/066702, WO 2005/075541 und WO 2005/044897. Verfahren zur Solubilisierung von hydrophoben Wirkstoffen finden sich u.a. in WO 2007/125028.

Nachteilig an den bekannten Amphiphilen zur Solubilisierung von hydrophoben Wirkstoffen in wässrigen Medien ist, dass sie nur kleine Mengen an Wirkstoff solubilisieren können. Außerdem sind die Amphiphile oft selbst nicht wasserlöslich oder nicht wasserdispergierbar, so dass sie zur Solubilisierung in wässrigen Medien nicht geeignet sind. Nachteilig ist weiterhin, dass die direkte Alkoxylierung von dendritischen Polyharnstoffen in der Praxis praktisch keinen Umsatz zu dem gewünschten Produkt liefert. Grund ist, dass die Umsetzung aufgrund der eingeschränkten Löslichkeit der Polyharnstoffe bevorzugt in Alkoholen durchgeführt werden muss, so dass in großem Umfang ethoxyliertes Lösungsmittel (d.h. ethyoxylierte Alkohole) als Nebenkomponente anfallen. Andere geeignete Lösungsmittel wie Dimethylformamid oder Dimethylsulfoxid werden unter den Reaktionsbedingungen der Alkoxylierung (hohe Temperatur, basischer pH-Wert) vom Katalysator KOH teilweise zersetzt oder abgebaut. Falls durch Alkoxylierung (z.B. in Schmelze) dennoch Produkte erhalten werden können, so sind diese oftmals aufgrund der ungleichen PEG-Kettenlängen nicht wasserlöslich oder weisen schlechtere Anwendungseigenschaften auf.

Aufgabe der vorliegenen Erfindung war es, ein alternatives Amphiphil zu finden, das zur Solubilisierung von schwerlöslichen Wirkstoffen in wässrigem Medium geeignet ist. Weitere Aufgabe war ein Amphiphil zu finden, dass möglichst hohe Mengen an Wirkstoff, insbesondere agrochemischen Wirkstoff, solubilisieren kann. Des Weiteren sollte das Amphiphil selbst wasserlöslich oder wasserdispergierbar sein. Schließlich war es auch Aufgabe, ein Amphiphil zu finden, das leicht aus vorgefertigen Bausteinen, wie vorgefertigten Polymeren, herstellbar ist.

Die Aufgabe wurde gelöst durch eine Zusammensetzung enthaltend ein Amphiphil und einen Wirkstoff, der in Wasser bei 20 °C zu höchstens 10 g/L löslich ist, wobei das Amphiphil einen dendritischen Polyharnstoff enthält, der verknüpft ist mit mindestens einem linearen oder Kamm-förmigen Polymer, und die Verknüpfung über einen difunktionellen Linker erfolgt, falls die Wiederholungseinheiten des linearen Polymers aus polymerisiertem Alkylenoxid bestehen.

Der Wirkstoff ist in Wasser bei 20 °C zu höchstens 10 g/L, bevorzugt zu höchstens 2 g/l, besonders bevorzugt zu höchstens 0,5 g/l und speziell zu höchstens 0,1 g/l löslich. Die Zusammensetzung kann einen oder mehrere verschiedene Wirkstoffe enthalten. Beispiele für Wirkstoffe sind agrochemische Wirkstoffe, kosmetische Wirkstoffe, pharmazeutische Wirkstoffe oder Nahrungsergänzungsmittel (wie Vitamine und Carotinoide). Bevorzugte Wirkstoffe sind agrochemische Wirkstoffe.

Beispiele für kosmetische Wirkstoffe sind kosmetische Öle, Riech- und Aromastoffe, Vitamine oder UV-Absorber. Kosmetische Öle sind unter anderem Erdnussöl, Jojobaöl, Kokosnussöl, Mandelöl, Olivenöl, Palmöl, Ricinusöl, Sojaöl oder Weizenkeimöl oder etherische Öle wie Latschenkiefernöl, Lavendelöl, Rosmarinöl, Fichtennadelöl, Kiefernnadelöl, Eukalyptusöl, Pfefferminzöl, Salbeiöl, Bergamotteöl, Terpentinöl, Melissenöl, Wacholderöl, Zitronenöl, Anisöl, Kardamomöl, Campheröl etc. oder deren Mischungen. UV-Absorber sind unter anderem 2-Hydroxy-4-methoxybenzophenon, 2,2',4,4'-Tetrahydroxybenzophenon, 2,2'-Dihydroxy-4,4'-dimethoxybenzophenon, 2,4-Dihydroxybenzophenon, 2-Cyano-3,3-diphenylacrylsäure-2'-ethylhexylester, 2,4,6-Trianilino-p-(carbo-2'-ethylhexyl-1'-oxi)-1,3,5-triazin, 3-(4-Methoxybenzyliden)-campher, N,N-Dimethyl-4-aminobenzoesäure-2-ethylhexylester, Salicylsäure-3,3,5-trimethylcyclohexylester, 4-Isopropyl-dibenzoylmethan, p-Methoxyzimtsäure-2-ethylhexylester und p-Methoxyzimtsäure-2-isoamylester sowie deren Mischungen.

Beispiele für Riech- und Aromastoffe sind wie in der WO 01/49817, oder in "Flavors and Fragrances", Ullmann's Encyclopedia of Industrial Chemistry, Whiley-VCH, 2002 beschrieben, auf die ausdrücklich Bezug genommen wird.

Beispiele für Vitamine sind Vitamine, Provitamine und Vitaminvorstufen aus den Gruppen A, C, E und F, insbesondere 3,4-Didehydroretinol, beta-Carotin (Provitamin des Vitamin A), Ascorbinsäure (Vitamin C), sowie die Palmitinsäureester, Glucoside oder Phosphate der Ascorbinsäure, Tocopherole, insbesondere alpha-Tocopherol sowie seine Ester, z.B. das Acetat, das Nicotinat, das Phosphat und das Succinat; weiterhin Vitamin F, worunter essentielle Fettsäuren, besonders Linolsäure, Linolensäure und Arachidonsäure, verstanden werden..

Als Beispiele für pharmazeutische Wirkstoffe seien hier genannt: Benzodiazepine, Antihypertensiva, Vitamine, Cytostatika, insbesondere Taxol, Anästhetika, Neuroleptika, Antidepressiva, antiviral wirksame Mittel, wie beispielsweise Anti-HIV wirksame Mittel, Antibiotika, Antimykotika, Antidementiva, Fungizide, Chemotherapeutika, Urologika, Thrombozytenaggregationshemmer, Sulfonamide, Spasmolytika, Hormone, Immunglobuline, Sera, Schilddrüsentherapeutika, Psychopharmaka, Parkinsonmittel und andere Antihyperkinetika, Ophthalmika, Neuropathiepräparate, Calciumstoffwechselregulatoren, Muskelrelaxantia, Narkosemittel, Lipidsenker, Lebertherapeutika, Koronarmittel, Kardiaka, Immuntherapeutika, regulatorische Peptide und ihre Hemmstoffe, Hypnotika, Sedativa, Gynäkologika, Gichtmittel, Fibrinolytika, Enzympräparate und Transportproteine, Enzyminhibitoren, Emetika, Durchblutungsfördernde Mittel, Diuretika, Diagnostika, Corticoide, Cholinergika, Gallenwegstherapeutika, Antiasthmatika, Broncholytika, Betarezeptorenblocker, Calciumantagonisten, ACE-Hemmer, Arteriosklerosemittel, Antiphlogistika, Antikoagulantia, Antihypotonika, Antihypoglykämika, Antihypertonika, Antifibrinolytika, Antiepileptika, Antiemetika, Antidota, Antidiabetika, Antiarrhythmika, Antianämika, Antiallergika, Anthelmintika, Analgetika, Analeptika, Aldosteronantagonisten, Abmagerungsmittel.

Der Begriff agrochemische Wirkstoffe (im Folgenden auch Pestizide genannt) bezeichnet mindestens einen Wirkstoff ausgewählt aus der Gruppe der Fungizide, Insektizide, Nematizide, Herbizide, Safener und/oder Wachstumsregulatoren. Bevorzugte Pestizide sind Fungizide, Insektizide und Herbizide, insbesondere Insektizide. Auch Mischungen von Pestiziden aus zwei oder mehr der vorgenannten Klassen können verwendet werden. Der Fachmann ist vertraut mit solchen Pestiziden, die beispielsweise in Pesticide Manual, 14th Ed. (2006), The British Crop Protection Council, London, gefunden werden können. Geeignete Insektizide sind Insektizide der Klasse der Carbamate, Organophophate, Organochlor-Insektizide, Phenylpyrazole, Pyrethroide, Neonicotinoide, Spinosine, Avermectine, Milbemycine, Juvenil Hormon Analoga, Alkylhalide, Organozinn-Verbindungen, Nereistoxin-Analoga, Benzoylharnstoffe, Diacylhydrazine, METI Akarizide, sowie Insektizide wie Chloropicrin, Pymetrozin, Flonicamid, Clofentezin, Hexythiazox, Etoxazol, Diafenthiuron, Propargit, Tetradifon, Chlorfenapyr, DNOC, Buprofezin, Cyromazin, Amitraz, Hydramethylnon, Acequinocyl, Fluacrypyrim, Rotenon, oder deren Derivate. Geeignete Fungizide sind Fungizide der Klassen Dinitroaniline, Allylamine, Anilinopyrimidine, Antibiotica, aromatische Kohlenwasserstoffe, Benzenesulfonamide, Benzimidazole, Benzisothiazole, Benzophenone, Benzothiadiazole, Benzotriazine, Benzylcarbamate, Carbamates, Carboxamide, Chloronitrile, Cyanoacetamideoxime, Cyanoimidazole, Cyclopropanecarboxamide, Dicarboximide, Dihydrodioxazine, Dinitrophenylcrotonate, Dithiocarbamate, Dithiolane, Ethylphosphonate, Ethylaminothiazolcarboxamide, Guanidines, Hydroxy-(2-amino-)pyrimidine, Hydroxyanilides, Imidazole, Imidazolinone, Anorganika, Isobenzofuranone, Methoxyacrylate, Methoxycarbamates, Morpholines, N-Phenylcarbamate, Oxazolidinedione, Oximinoacetate, Oximinoacetamide, Peptidylpyrimidinnucleoside, Phenylacetamide, Phenylamide, Phenylpyrrole, Phenylharnstoffe, Phosphonate, Phosphorothiolate, Phthalamsäuren, Phthalimide, Piperazine, Piperidine, Propionamide, Pyridazinone, Pyridine, Pyridinylmethylbenzamide, Pyrimidinamine, Pyrimidine, Pyrimidinonehydrazone, Pyrroloquinolinone, Quinazolinone, Chinoline, Chinone, Sulfamide, Sulfamoyltriazole, Thiazolecarboxamide, Thiocarbamate, Thiophanate, Thiophenecarboxamide, Toluamide, Triphenylzinn Verbindungen, Triazine, Triazole. Geeignete Herbizide sind Herbizide der Klassen der Acetamide, Amide, Aryloxyphenoxypropionate, Benzamide, Benzofuran, Benzoesäuren, Benzothiadiazinone, Bipyridylium, Carbamate, Chloroacetamide, Chlorcarbonsäuren, Cyclohexanedione, Dinitroaniline, Dinitrophenol, Diphenylether, Glycine, Imidazolinone, Isoxazole, Isoxazolidinone, Nitrile, N-phenylphthalimide, Oxadiazole, Oxazolidinedione, Oxyacetamide, Phenoxycarbonsäuren, Phenylcarbamate, Phenylpyrazole, Phenylpyrazoline, Phenylpyridazine, Phosphinsäuren, Phosphoroamidate, Phosphorodithioate, Phthalamate, Pyrazole, Pyridazinone, Pyridine, Pyridincarbonsäuren, Pyridinecarboxamide, Pyrimidindione, Pyrimidinyl(thio)benzoate, Chinolincarbonsäuren, Semicarbazone, Sulfonylaminocarbonyltriazolinone, Sulfonylharnstoffe, Tetrazolinone, Thiadiazole, Thiocarbamate, Triazine, Triazinone, Triazole, Triazolinone, Triazolocarboxamide, Triazolopyrimidine, Triketone, Uracile, Harnstoffe.

In einer Ausführungsform enthält das Pestizid ein Insektizid, bevorzugt besteht das Pestizid aus mindestens einem Insektizid. Bevorzugte Insektizide sind Fipronil, Allethrin, Alpha-Cypermethrin, Beta-Cyfluthrin, Bifenthrin, Bioallethrin, 4-Chlor-2-(2-chlor-2methylpropyl)-5-[(6-iod-3-pyridinyl)methoxy]-3(2H)-pyridazinone (CAS-RN: 120955-77-3), Chlorfenapyr, Chlorpyrifos, Cyfluthrin, Cyhalothrin, Cypermethrin, Deltamethrin, Etofenprox, Fenoxycarb, Flufenoxuron, Hydramethylnon, Metaflumizone, Permethrin, Pyriproxifen, Silafluofen, Tebufenozide und Tralomethrin. Besonders bevorzugte Insektizide sind Fipronil, Alpha-Cypermethrin, Bifenthrin, Chlorfenapyr, Cyfluthrin, Cypermethrin, Deltämethrin, Etofenprox, Hydramethylnon, Metaflumizone, Permethrin. Ganz besonders bevorzugte Insektizide sind Fipronil, Alpha-Cypermethrin, Deltamethrin, Chlorfenapyr, Hydramethylnon und Metaflumizone. Insbesondere bevorzugtes Insektizid ist Fipronil. In einer weiteren Ausführungsform enthält das Pestizid ein Fungizid, bevorzugt besteht das Pestizid aus mindestens einem Fungizid. Bevorzugte Fungizide sind Pyraclostrobin, Metconazol und Epoxiconazol. In einer weiteren Ausführungsform enthält das Pestizid ein Herbizid, bevorzugt besteht das Pestizid aus mindestens einem Herbizid. In einer weiteren Ausführungsform enthält das Pestizid ein Wachstumsregulator, bevorzugt besteht das Pestizid aus mindestens einem Wachstumsregulator.

Die erfindungsgemäße Zusammensetzung umfasst üblicherweise 0.1 bis 70 Gew.% Wirkstoff, bevorzugt 1 bis 50 Gew. %, insbesondere 3 bis 30 Gew.%, bezogen auf die Zusammensetzung.

Amphiphile enthalten üblicherweise mindestens einen polaren (hydrophilen) und mindestens einen apolaren (hydrophoben) Teil. Typische Amphiphile sind Fettsäuren, Tenside und Phospholipide. Die Zusammensetzung kann ein oder mehrere verschiedene Amphiphile enthalten.

Die erfindungsgemäße Zusammensetzung enthält meist 0,01 bis 40 Gew.%, bevorzugt 0,05 bis 30 Gew.%, besonders bevorzugt 0,1 bis 20 Gew.% Amphiphil. Das Amphiphil ist meist löslich oder dispergierbar in Wasser, das heißt, dass es möglich ist eine klare (d.h. ohne Partikel, die mit dem blossen Auge erkennbar sind) wässrige Lösung oder Dispersion herzustellen.

Im Rahmen der vorliegenden Erfindung umfasst der Begriff "dendritische" Polymere ganz allgemein Polymere, die sich durch eine verzweigte Struktur und eine hohe Funktionalität auszeichnen. Zu den "dendritischen Polymeren" im Sinne der Erfindung zählen Dendrimere, hyperverzweigte Polymere und davon abgeleitete Strukturen.

"Dendrimere" sind molekular einheitliche Makromoleküle mit einem hochsymmetrischen Aufbau. Dendrimere leiten sich strukturell ab von Sternpolymeren, wobei die einzelnen Ketten jeweils ihrerseits sternförmig verzweigt sind. Sie entstehen ausgehend von kleinen Molekülen durch eine sich ständig wiederholende Reaktionsfolge, wobei immer höhere Verzweigungen resultieren, an deren Enden sich jeweils funktionelle Gruppen befinden, die wiederum Ausgangspunkt für weitere Verzweigungen sind. So wächst mit jedem Reaktionsschritt die Zahl der Monomer-Endgruppen an, wobei am Ende eine kugelförmige Baumstruktur entsteht. Ein charakteristisches Merkmal der Dendrimere ist die Anzahl der zu ihrem Aufbau durchgeführten Reaktionsstufen (Generationen). Auf Grund ihres einheitlichen Aufbaus weisen Dendrimere in der Regel eine definierte Molmasse auf.

Bevorzugt geeignet sind sowohl molekular wie strukturell uneinheitliche hyperverzweigte Polymere, die Seitenketten unterschiedlicher Länge und Verzweigung sowie eine Molmassenverteilung aufweisen. Zur allgemeinen Definition hyperverzweigter Polymere wird auch auf P. J. Flory, J. Am. Chem. Soc. 1952, 74, 2718 und H. Frey et al., Chem. Eur. J. 2000, 6, Nr. 14, 2499 Bezug genommen.

Zur Synthese dieser hyperverzweigten Polymere eignen sich insbesondere so genannte ABₓ-Monomere. Diese weisen zwei verschiedene funktionelle Gruppen A und B auf, die unter Bildung einer Verknüpfung miteinander reagieren können. Die funktionelle Gruppe A ist dabei nur einmal pro Molekül enthalten und die funktionelle Gruppe B zweifach oder mehrfach. Durch die Reaktion der besagten ABₓ-Monomere miteinander entstehen im Wesentlichen unvernetzte Polymere mit regelmäßig angeordneten Verzweigungsstellen. Die Polymere weisen an den Kettenenden fast ausschließlich B-Gruppen auf. Nähere Einzelheiten sind beispielsweise in Journal of Molecular Science, Rev. Macromol. Chem. Phys., C37(3), 555-579 (1997) zu finden.

Die erfindungsgemäß eingesetzten hyperverzweigten Polymere weisen vorzugsweise einen Verzweigungsgrad (Degree of Branching, DB) pro Molekül von 10 bis 100 %, bevorzugt 10 bis 90 % und insbesondere 10 bis 80 %, auf. Zur Definition des "Degree of Branching" wird auf H. Frey et al., Acta Polym. 1997, 48, 30 verwiesen.

Hyperverzweigte Polymere, d. h. molekular und strukturell uneinheitliche Polymere, werden bevorzugt eingesetzt. Diese sind in der Regel einfacher und somit wirtschaftlicher herstellbar als Dendrimere.

Die vorliegende Erfindung betrifft eine spezielle Art von dendritischen Polymeren, nämlich dendritische Polyharnstoffe, insbesondere hyperverzweigte Polyharnstoffe. Der Begriff "Polyharnstoff" umfasst im Sinne der vorliegenden Erfindung Polymere, die zusätzlich zu Harnstoffgruppen auch Urethangruppen, Allophanatgruppen, Biuretgruppen und weitere funktionelle Gruppen, wie bspw. Aminfunktionen aufweisen können. Die Urethangruppen sind meist O-Alkylurethangruppen, wobei der Alkylrest ein bis 18 Kohlenstoffatome aufweist. Bevorzugt sind die O-Alkylurethangruppen erhältlich durch Reaktion einer Isocyanatgruppe mit einem Monoalkohol, der als Blockierungsmittel eingesetzt wurde.

Bevorzugt sind dendritische Polyharnstoffe, die ein gewichtsmittleres Molekulargewicht im Bereich von etwa 500 bis 100000 g/mol, bevorzugt 1000 bis 50000 g/mol, aufweisen. Die Bestimmung erfolgt meist per Gelpermeationschromatographie mit einem Refraktometer als Detektor. Bevorzugt wird die Bestimmung wie in den Beispielen beschrieben durchgeführt.

Der dendritische Polyharnstoff ist bevorzugt nicht löslich oder dispergierbar in Wasser, das heißt, dass es nicht möglich ist eine klare (d.h. ohne Partikel, die mit dem blossen Auge erkennbar sind) wässrige Lösung oder Dispersion herzustellen.

Dendritische, insbesondere hyperverzweigte Polyharnstoffe sind, wie dem Fachmann bekannt, auf verschiedenen Wegen zugänglich, so beispielsweise durch direkte Umsetzung von Harnstoff mit Polyaminen bzw. durch Umsetzung von Dialkylcarbonaten mit Polyaminen. Bevorzugt sind Polyharnstoffe dieser Erfindung jedoch zugänglich durch Umsetzung eines blockierten Polyisocyanats mit Polyaminen. Weitere Herstellverfahren sind beschrieben, z.B. beschreibt WO05044897 A1 die Synthese von hyperverzweigten Polyharnstoffen aus Carbonaten (z.B. Diethylcarbonat; A2-Monomer) und mehrfachfunktionellen Aminen (z.B. Triaminen; B3-Monomere), oder WO05075541 beschreibt die Synthese von hyperverzweigten Polyharnstoffen aus Harnstoff oder Harnstoffderivaten (A2-Monomere) sowie mehrfachfunktionellen Aminen (z.B. Triaminen; B3-Monomere).

Der dendritische Polyharnstoff, insbesondere der hyperverzweigte Polyharnstoff, ist bevorzugt erhältlich durch ein Verfahren umfassend die Umsetzung eines mindestens difunktionellen blockierten Di- oder Polyisocyanats mit mindestens einem mindestens difunktionellen primären und/oder sekundären Amin unter Eliminierung des Blockierungsmittels zum Polyharnstoff.

Die mindestens difunktionellen blockierten Di-oder Polyisocyanate können zum Beispiel hergestellt werden aus der Reaktion von Di-oder Polyisocyanaten mit aliphatischen, araliphatischen oder aromatischen Alkoholen, vorzugsweise Monoalkoholen. Weiterhin können sie beispielsweise dargestellt werden durch Umsetzung von primären Aminen mit Alkohol und Harnstoff gemäss EP-A-18586, durch Umsetzung von primären Aminen mit O-Alkylcarbamaten gemäss EP 18588 oder EP-A-28338, durch Umsetzung von primären Aminen mit Dimethylcarbonat gemäss EP-A-570071 oder auch durch Umsetzung von Formamiden mit Dimethylcarbonat oder von primären Aminen mit Methylformiat gemäss EP-A-609786. Allgemein können auch Di-oder Polyisocyanate verwendet werden, die als Ausgangsprodukte oder Zwischenprodukte bei der Synthese phosgenfrei hergestellter Di-oder Polyisocyanate gemäss den Schriften EP 355443, EP 566925, EP 568782 oder DE 19820114 anfallen.

Bei der Reaktion der Di-oder Polyisocyanate mit den Di-oder Polyaminen zu den hyperverzweigten Polyharnstoffen wird die Reversibilität der Reaktion zwischen Isocyanat und Alkohol gegenüber der Irreversibilität der Reaktion zwischen Isocyanat und Amin bei den gegebenen Reaktionsbedingungen ausgenutzt, um einen gezielten Molekülaufbau zu steuern. Der Alkohol wird hier im Prinzip als Blockierungsmittel für die Isocyanatgruppe, also als Moderator für die extreme Reaktivität des Isocyanats mit dem Amin genutzt.

Als Blockierungsmittel eignen sich Monoalkohole oder Blockierungsreagenzien, bevorzugt Monoalkohole. Geeignete Monoalkohole sind vorzugsweise lineare oder verzweigte aliphatische Monoalkohole, wie Methanol, Ethanol, Propanol, Butanol, Pentanol, Hexanol, Heptanol, Octanol, Isopropanol, Isobutanol oder 2-Ethyl-1-hexanol oder araliphatische Monoalkohole, wie Benzylalkohol oder Phenylethanol in Betracht. Besonders bevorzugt sind die linearen oder verzweigten aliphatischen Monoalkohole sowie Benzylalkohol. Speziell bevorzugt sind lineare aliphatische Monoalkoole mit 1 bis 18, bevorzugt 1 bis 6 Kohlenstoffatomen.

In einer weiteren Ausführungsform geht man aus von mindestens difunktionellen blockierten Di-oder Polyisocyanaten, deren NCO-Gruppen mit sogenannten Blockierungsreagenzien, wie sie im Stand der Technik beschrieben sind, blockiert werden. Diese Blockierungsreagenzien zeichnen sich dadurch aus, dass sie eine thermisch reversible Blockierung der Isocyanat-Gruppen bei Temperaturen in der Regel unter 160 °C gewährleisten. Daher werden derartige Blockierungsmittel zur Modifikation von Isocyanaten eingesetzt, die in thermisch härtbaren Einkomponenten-Polyurethansystemen Einsatz finden. Vorzugsweise werden als Blockierungsreagenzien Phenole, Caprolactam, 1 H-Imidazol, 2-Methylimidazol, 1,2,4-Triazol, 3,5-Dimethylpyrazol, Malonsäuredialkylester, Acetanilid, Acetonoxim oder Butanonoxim verwendet. Die Reaktion mit dem Di-oder Polyamin zum hyperverzweigten Polyharnstoff erfolgt auch hier unter Eliminierung des Blockierungsmittels. Im Folgenden werden daher die mit Monoalkoholen oder mit Blockierungsreagenzien blockierten NCO-Gruppen als"verkappte NCO-Gruppen" bezeichnet.

Die dendritische, insbeosere der hyperverzweigte, Polyharnstoff ist nach der Reaktion, also ohne Modifikation, entweder mit Amino- oder mit verkappten NCO-Gruppen terminiert. Sie lösen sich gut in polaren Lösemitteln, zum Beispiel in Alkoholen, wie Methanol, Ethanol, Butanol, Alkohol/Wasser-Mischungen, Estern wie Ethylacetat und Butylacetat, des weiteren in Dimethylformamid, Dimethylacetamid, N-Methylpyrrolidon, E-thylencarbonat oder Propylencarbonat.

Unter einem dendritischen, insebsondere einem hyperverzweigten, Polyharnstoff ist im Rahmen dieser Erfindung ein Produkt zu verstehen, das Harnstoffgruppen sowie mindestens drei, bevorzugt mindestens sechs, mehr bevorzugt mindestens acht funktionelle Gruppen aufweist. Die Anzahl der funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polyharnstoffe der vorliegenden Erfindung weisen zumeist nicht mehr als 100 funktionelle Gruppen, bevorzugt nicht mehr als 50 funktionelle Gruppen auf.

Die bei der Herstellung der dendritischen, insbesondere hyperverzweigten, Polyharnstoffe verwendeten mindestens difunktionellen primären und/oder sekundären Amine sind aus Verbindungen ausgewählt, die mindestens zwei mit Urethangruppen reaktive Amin-Gruppen tragen. Verbindungen mit mindestens zwei mit Urethangruppen reaktiven Amin-Gruppen sind zum Beispiel Ethylendiamin, N-Alkylethylendiamin, Propylendiamin, 2, 2-Dimethyl-1,3-propandiamin, N-Alkylpropylendiamin, Butylendiamin, N-Alkylbutylendiamin, Hexamethylendiamin, N-Alkylhexamethylendiamin, Toluylendiamin, Diaminodiphenylmethan, Diaminodicyclohexylmethan, Phenylendiamin, Cyclohexyldiamin, Diaminodiphenylsulfon, Isophorondiamin, 2-Butyl-2-ethyl-1, 5-pentamethylendiamin, 2,2,4- oder 2,4, 4-Trimethyl-1,6-hexamethylen-diamin, 2-Aminopropylcyclohexylamin, 3 (4)-Aminomethyl-1-methylcyclohexyl-amin, 1, 4-Diamino-4-methylpentan, Amin-terminierte Polyoxyalkylenpolyole (sogenannte Jeffamine), aminierte Polytetramethylenglykole, N-Aminoalkylpiperidine, Ammoniak, Bis (aminoethyl) amin, Bis (aminopropyl) amin, Bis (aminobutyl) amin, Bis (aminopentyl) amin, Bis (aminohexyl) amin, Tris (aminoethyl) amin, Tris (aminopropyl) amin, Tris (aminohexyl) amin, Trisaminohexan, 4-Aminomethyl-1,8-octamethylendiamin, N'(3-Aminopropyl)-N, N-dimethyl-1, 3-propandiamin, Trisaminononan oder Melamin. Weiterhin sind auch beliebige Mischungen aus mindestens zwei der genannten Verbindungen einsetzbar. Bevorzugte mindestens difunktionelle primäre und/oder sekundäre Amine sind mindestens difunktionelle primäre Amine, besonders bevorzugt difunktionelle aliphatische primäre Amine, insbesondere Isophorondiamin.

Als Di-oder Polyisocyanate kommen die nach dem Stand der Technik bekannten und nachfolgend beispielhaft genannten aliphatischen, cycloaliphatischen, araliphatischen und aromatischen Di-oder Polyisocyanate in Frage. Zu nennen sind hier vorzugsweise 4,4'-Diphenylmethandiisocyanat, die Mischungen aus monomeren Diphenylmethandiisocyanaten und oligomeren Diphenylmethandiisocyanaten (Polymer-MDI), Tetramethylendiisocyanat, Tetramethylendiisocyanat-Trimere, Hexamethylendiisocyanat, Hexamethylendiisocyanat-Trimere, Isophorondiisocyanat-Trimer, 4, 4'-Methylenbis (cyclohexyl)diisocyanat, Xylylendiisocyanat, Tetramethylxylylendiisocyanat Dodecyldiisocyanat, Lysinalkylester-diisocyanat, wobei Alkyl für C1 bis C10 steht, 1,4-Diisocyanatocyclohexan oder 4-Isocyanatomethyl-1,8-octamethylendiisocyanat.

Besonders bevorzugt zum Aufbau der Polyharnstoffe sind Di-oder Polyisocyanate geeignet, die NCO-Gruppen unterschiedlicher Reaktivität aufweisen. Genannt seien hier 2,4-Toluylendiisocyanat (2,4-TDI), 2,4'-Diphenylmethandiisocyanat (2, 4'-MDI), Triisocyanatotoluol, Isophorondiisocyanat (IPDI), 2-Butyl-2-ethylpentamethylendiisocyanat, 2,2,4 oder 2,4,4-Trimethyl-1,6-hexamethylendiisocyanat, 2-Isocyanatopropylcyclohexylisocyanat, 3(4)-Isocyanatomethyl-1-methylcyclohexyl-isocyanat, 1,4-Diisocyanato-4-methylpentan, 2,4'-Methylenbis (cyclohexyl) diisocyanat und 4-Methylcyclohexan-1,3-diisocyanat (HTDI). Weiterhin sind zum Aufbau der Polyharnstoffe Isocyanate geeignet, deren NCO-Gruppen zunächst gleich reaktiv sind, bei denen sich jedoch durch Erstaddition eines Reaktanden an einer NCO-Gruppe ein Reaktivitätsabfall bei der zweiten NCO-Gruppe induzieren lässt. Beispiele dafür sind Isocyanate, deren NCO-Gruppen über ein delokalisiertes π-Elektronensystem gekoppelt sind, z. B. 1,3- und 1,4-Phenylendiisocyanat, 1,5-Naphthylendiisocyanat, Diphenyldiisocyanat, Tolidindiisocyanat oder 2,6-Toluylendiisocyanat.

Weiterhin können beispielsweise Oligo-oder Polyisocyanate verwendet werden, die sich aus den oben genannten Di-oder Polyisocyanaten oder deren Mischungen durch Verknüpfung mittels Urethan-, Allophanat-, Harnstoff-, Biuret-, Uretdion-, Amid-, Isocyanurat-, Carbodiimid-, Uretonimin-, Oxadiazintrion-oder Iminooxadiazindion-Strukturen herstellen lassen.

Speziell bevorzugt zum Aufbau der Polyharnstoffe geeignete Di-oder Polyisocyanate sind Oligo-oder Polyisocyanate, die sich aus aliphatischen, cycloaliphatischen, araliphatischen und aromatischen, bevorzugt aliphatischen, Di-oder Polyisocyanaten durch Verknüpfung mittels Urethan-, Allophanat-, Harnstoff-, Biuret-, Uretdion-, Amid-, Isocyanurat-, Carbodiimid-, Uretonimin-, Oxadiazintrion- oder Iminooxadiazindion-Strukturen, bevorzugt mittels Isocyanurat-Strukturen, herstellen lassen. Üblicherweise haben diese Oligo-oder Polyisocyanate eine mittlere NCO-Funktionalität von 2,1 bis 4,9, bevorzugt 2,9 bis 4,4, insbesondere von 3,4 bis 3,9. Die mittlere Molmasse liegt meist bei 300 bis 3000 g/mol, bevorzugt bei 400 bis 1500 g/mol, insbesondere bei 500 bis 800 g/mol.

Bei der Herstellung der hochfunktionellen Polyharnstoffe ist es notwendig, das Verhältnis von Verbindungen mit mindestens zwei mit verkappten NCO-Gruppen reaktiven Amin-Gruppen zu dem verkappten Isocyanat molar so einzustellen, dass das resultierende einfachst denkbare Kondensationsprodukt (im weiteren Kondensationsprodukt (A) genannt) im Mittel entweder eine verkappte NCO-Gruppe und mehr als eine mit der verkappten NCO-Gruppe reaktive Gruppe oder eine mit verkappten NCO-Gruppen reaktive Gruppe und mehr als eine verkappte NCO-Gruppe enthält. Die einfachste Struktur des Kondensationsproduktes (A) aus einem verkappten Di-oder Polyisocyanat (X) und einem Di-oder Polyamin (Y) ergibt dabei die Anordnung XYₙ oder XₙY, wobei n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im folgenden generell "fokale Gruppe"genannt.

Liegt beispielsweise bei der Herstellung des einfachsten Kondensationsproduktes (A) aus einem verkappten Diisocyanat und einem zweiwertigen Amin das Umsetzungsverhältnis bei 1 : 1, so resultiert ein Molekül des Typs XY. Bei der Herstellung des Kondensationsproduktes (A) aus einem verkappten Diisocyanat und einem dreiwertigen Amin bei einem Umsetzungsverhältnis von 1 : 1 resultiert ein Molekül des Typs XY₂. Fokale Gruppe ist hier eine verkappte Isocyanatgruppe. Bei der Herstellung des Kondensationsproduktes (A) aus einem verkappten Diisocyanat und einem vierwertigen Amin ebenfalls mit dem Umsetzungsverhältnis 1 : 1 resultiert ein Molekül des Typs XY₃. Fokale Gruppe ist hier ein verkapptes Isocyanat. Weiterhin kann die Herstellung des Kondensationsprodukts (A) zum Beispiel auch aus einem verkappten Diisocyanat und einer dreiwertigen, mit dem verkappten Diisocyanat reaktiven Komponente erfolgen, wobei das Umsetzungsverhältnis bei molar 2 : 1 liegt. Hier resultiert ein Molekül des Typs X₂Y, fokale Gruppe ist hier ein Amin. Werden zu den Komponenten zusätzlich difunktionelle Verbindungen, z. B. mit zwei verkappten Isocyanatgruppen oder mit zwei Amingruppen gegeben, so bewirkt dies eine Verlängerung der Ketten. Es resultiert wieder ein Molekül des Typs X₂Y, fokale Gruppe ist ein verkapptes Isocyanat.

Das Reaktionsprodukt (A) wird vorzugsweise nicht isoliert. Bevorzugt findet im weiteren Verlauf des Verfahrens direkt die Umsetzung der Reaktionsprodukte (A) zu dem hyperverzweigten Polyharnstoff (P) statt.

Die Umsetzung zum Kondensationsprodukt (A) und zum Polykondensationsprodukt (P) erfolgt üblicherweise bei einer Temperatur von 0 bis 250 °C, bevorzugt bei 60 bis 160 °C in Substanz oder in Lösung. Dabei können allgemein alle Lösungsmittel verwendet werden, die gegenüber den jeweiligen Edukten inert sind. Bevorzugt verwendet werden organische Lösungsmittel, wie zum Beispiel Decan, Dodecan, Benzol, Toluol, Chlorbenzol, Xylol, Dimethylformamid, Dimethylacetamid oder Solventnaphtha. In einer bevorzugten Ausführungsform wird die Kondensationsreaktion in Substanz durchgeführt. Das bei der Reaktion mit dem Amin freiwerdende Verkappungsmittel, zum Beispiel der zur Urethanisierung verwendete Alkohol, kann zur Beschleunigung der Reaktion destillativ, gegebenenfalls bei vermindertem Druck, aus dem Reaktionsgleichgewicht entfernt werden.

In einer weiteren bevorzugten Ausführungsform wird der zur Blockierung eingesetzte Alkohol als Lösungsmittel für die Reaktion verwendet. Dabei wird die UrethanKomponente in dem Alkohol gelöst vorgelegt und die Amin-Komponente im entsprechenden Verhältnis zugegeben. Bei Erhöhung der Temperatur wird der als Urethan gebundene Alkohol durch die Aminkomponente verdrängt und es bildet sich der erfindungsgemässe Harnstoff. Die im Überschuss vorliegende Alkoholkomponente fungiert weiterhin als Lösungsmittel für die gebildeten Harnstoffe.

Zur Beschleunigung der Reaktion können auch Katalysatoren oder Katalysatorgemische zugegeben werden. Geeignete Katalysatoren sind im allgemeinen Verbindungen, die Urethan-Reaktionen katalysieren, zum Beispiel Amine, Ammoniumverbindungen, Aluminium-, Zinn-, Zink, Titan-, Zirkon-oder Wismut-organische Verbindungen. Beispielsweise können Diazabicyclooctan (DABCO), Diazabicyclononen (DBN), Diazabicycloundecen (DBU), Imidazole, wie Imidazol, 1-Methylimidazol, 2-Methylimidazol, 1,2-Dimethylimidazol, Titantetrabutylat, Dibutylzinnoxid, Dibutylzinn-dilaurat, Zinndioctoat, Zirkonacetylacetonat oder Gemische davon eingesetzt werden. Die Zugabe des Katalysators erfolgt im allgemeinen in einer Menge von 50 bis 10000, bevorzugt von 100 bis 5000 Gew. ppm bezogen auf die Menge des eingesetzten Isocyanats. Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen. Die Kondensationsprodukte (A) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (A) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) entweder eine verkappte Isocyanatgruppe als fokale Gruppe und mehr als zwei mit verkappten Isocyanatgruppen reaktive Gruppen oder aber eine mit verkapptem Isocyanat reaktive Gruppe als fokale Gruppe und mehr als zwei verkappte Isocyanatgruppen auf. Die Anzahl der reaktiven Gruppen ergibt sich dabei aus der Beschaffenheit der eingesetzten Kondensationsprodukte (A) und dem Polykondensationsgrad.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (A) oder das Polykondensationsprodukt (P) lagerstabil ist. In einer bevorzugten Ausführungsform wird, sobald aufgrund der intermolekularen Reaktion des Kondensationsproduktes (A) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt. So kann bei einer verkappten NCO-Gruppe als fokaler Gruppe zum Beispiel ein Mono-, Di-oder Polyamin zugegeben werden. Bei einem Amin als fokaler Gruppe kann dem Produkt (P) beispielsweise ein Mono-, Di-oder Polyurethan, ein Mono-, Di- oder Polyisocyanat, ein Aldehyd, Keton oder ein mit Amin reaktives Säurederivat zugegeben werden.

Die Herstellung der dendritischen Polyharnstoffe erfolgt zumeist in einem Druckbereich von 2 mbar bis 20 bar, bevorzugt bei Normaldruck, in Reaktoren oder Reaktorkaskaden, die im Batchbetrieb, halbkontinuierlich oder kontinuierlich betrieben werden. Durch die vorgenannte Einstellung der Reaktionsbedingungen und gegebenenfalls durch die Wahl des geeigneten Lösemittels können die erfindungsgemässen Produkte nach der Herstellung ohne weitere Reinigung weiterverarbeitet werden.

Das Amphiphil enthält bevorzugt einen dendritischen Polyharnstoff, der verknüpft ist mit mindestens einem linearen oder Kamm-förmigen Polymer, und die Verknüpfung über einen difunktionellen Linker erfolgt, falls das lineare Polymer aus einem Polyalkylenoxid besteht.

Das Molverhältnis von dendritischem Polyharnstoff zur Summe aus linearem und Kamm-förmigem Polymer liegt meist im Bereich von 1 : 1 bis 1 : 100, bevorzugt 1 : 1 bis 1 : 50, besonders bevorzugt 1 : 1 bis 1 : 25.

Bevorzugt ist das lineare Polymer
a) ein Homopolymer oder statistisches Copolymer enthaltend ein polares, ethylenisch ungesättigtes Monomer,
b) ein Blockpolymer enthaltend einen Block aus Polyethylenglykol oder auf Basis mindestens eines polaren, ethylenisch ungesättigten Monomers, oder
c) ein Polykondensat enthaltend Polyethylenglykol, oder
d) ein Polyethylenglykol,
wobei das Polyethylenglykol d) über einen difunktionellen Linker mit dem dendritischen Polyharnstoff verknüpft ist. Besonders bevorzugt ist das lineare Polymer eines der vorgenannten Polymere a), b) oder c). In einer weiteren besonders bevorzugten Ausführungsform ist das lineare Polymer eines der vorgenannten Polymere a), c) oder d). Speziell bevorzugt ist das lineare Polymer eines der vorgenannten Polymere a) oder c), insbesondere a).

Das lineare Polymer kann in einer Ausführungsform ein Homopolymer oder statistisches Copolymer enthaltend ein polares, ethylenisch ungesättigtes Monomer sein. Die zahlenmittlere Molmasse Mn liegt meist unter 100000 g/mol, bevorzugt unter 50.000 g/mol, besonders bevorzugt unter 20.000 g/mol und ganz besonders bevorzugt unter 10.000 g/mol und kann durch GPC und einem geeigneten Standard ermittelt werden. Mn liegt üblicherweise über 200 g/mol, bevorzugt über 500 g/mol.

Geeignete polare, ethylenisch ungesättigte Monomere sind Ladung tragende oder ionisierbare Gruppen tragende Monomere, die eine polymerisierbare, ethylenisch ungesättige Bindung enthalten. Beispiele für Ladung tragende oder ionisierbare Gruppen sind Carbonsäure, Sulfonsäure, Polyethylenglykol, Alkohol, Nitril, Amid, Amin, Dialkylamin. Beispiele für polare, ethylenisch ungesättigte Monomere sind Vinylpyrrolidon, (Meth)Acrylsäure, ein Sulfonsäure-haltiges (Meth)Acrylat (wie Acrylamido-2-methylpropansulfonsäure), ein Amino-funktionelles (Meth)Acrylat (wie Dimethylaminoethyl-(meth)acrylat), (Meth)Acrylsäureester von einem Polyethylenglykolderivat (wie Polyethylenglykolmonomethylether(meth)acrylat), Itaconsäure, Maleinsäureanhydrid, OH-Gruppen substituierte C₁-C₂₀-Alkyl(meth)acrylate (wie Hydroxylethyl(meth)acrylat, Hydroxybutyl(meth)acrylat), (Meth)Acrylnitril, (Meth)Acrylamid, N-Methylol(meth)-acrylamid. Bevorzugte polare, ethylenisch ungesättigte Monomere sind Vinylpyrrolidon, (Meth)Acrylsäure, Polyethylenglykolmonomethylether(meth)acrylat, Polyethylenglykol(meth)acrylat. Der Ausdruck "(Meth)Acryl" bedeutet "Acryl" oder "Methacryl".

Beispiele für lineare Homopolymere enthaltend ein polares, ethylenisch ungesättigtes Monomer sind Homopolymere der vorgenannten polaren, ethylenisch ungesättigten Monomere, bevorzugt von Vinylpyrrolidon, (Meth)Acrylsäure, Polyethylenglykolmonomethylether(meth)acrylat, Polyethylenglykol(meth)acrylat.

Beispiele für statistische Copolymere enthaltend ein polares, ethylenisch ungesättigtes Monomer sind Copolymere der vorgenannten polaren, ethylenisch ungesättigten Monomere, bevorzugt von Vinylpyrrolidon, (Meth)Acrylsäure, Polyethylenglykolmonomethylether(meth)acrylat, Polyethylenglykol(meth)acrylat. Als weiteres Monomer kann das statistische Copolymer enthalten: Ester der Acrylsäure mit C₁-C₁₀-Alkanolen wie Ethylacrylat, n-Butylacrylat, Isobutylacry-lat, tert.-Butylacrylat, n-Hexylacrylat, 2-Ethylhexylacrylat und 3-Propylheptylacrylat, die Ester der Methacrylsäure mit C₁-C₁₀-Alkanolen wie Methylmethacrylat, Ethylmethacrylat, n-Butylmethacrylat, Isobutylmethacrylat, tert.-Butylmethacrylat und n-Hexylmethacrylat, N-(C₂-C₁₀-Alkyl)amide der Acrylsäure und der Methacrylsäure sowie die N-(C₁-C₂-Alkyl)-N-(C₂-C₁₀-alkyl)amide der Acrylsäure und der Methacrylsäure, z. B. N-Ethylacrylamid, N,N-Diethylacrylamid, N-Butylacrylamid, N-Methyl-N-propylacrylamid, N-(n-Hexyl)acrylamid, N-(n-Octyl)-acrylamid und die entsprechenden Methacrylamide, vinylaromatische Monomere wie Styrol, Methylstryrol, Vinyltoluol, Olefine mit 2 bis 10 C-Atomen, vorzugsweise α-Olefine mit 3 bis 10 C-Atomen wie Propen, 1-Buten, 1-Penten, 1-Hexen, 1-Octen und 1-Decen, Vinylester aliphatischer Carbonsäuren wie Vinylacetat, Vinylpropionat, Vinyllaurat, Vinylnonanoat, Vinyldecanoat, Vinyllaurat und Vinylstearat, ungesättigte Nitrile wie Acrylnitril und Methacrylnitril, halogenierte Olefine wie Vinylchlorid, C₁₁-C₂₀-Alkylester monoethylenisch ungesättigter Monocarbonsäuren mit vorzugsweise 3 bis 6 C-Atomen, z. B. C₁₁-C₂₀-Alkylacrylate und C₁₁-C₂₀-Alkylmethacrylate wie Laurylacrylat, Laurylmethacry-lat, Isotridecylacrylat, Isotridecylmethacrylat, Stearylacrylat, Stearylmethacrylat, Di-C₁-C₂₀-Alkylester ethylenisch ungesättigter Dicarbonsäuren mit vorzugsweise 4 bis 8 C-Atomen, z. B. Di-C₁-C₂₀-Alkylester der Fumarsäure und der Maleinsäure wie Di-methylfumarat, Dimethylmaleat, Dibutylfumarat und Dibutylmaleat, Glycidylester monoethylenisch ungesättigter Monocarbonsäuren mit vorzugsweise 3 bis 6 C-Atomen, wie Glycidylacrylat und Glycidylmethacrylat. Bevorzugte weitere Monomere sind die Ester mit C₁-C₁₀-Alkanolen der Acrylsäure und der Methacrylsäure.

Das lineare Polymer kann in einer weiteren Ausführungsform ein Blockpolymer enthaltend einen Block aus Polyethylenglykol oder aus mindestens einem polaren, ethylenisch ungesättigten Monomer sein. Die Molmasse Mn liegt meist im Bereich von 200-10.000 g/mol, bevorzugt zwischen 300 und 2000 g/mol, und kann durch GPC ermittelt werden. Das Blockpolymer kann vom A-B oder A-B-A, bevorzugt A-B Typ sein. Die Herstellung von Blockpolymeren dieser Typen ist allgemein bekannt. Geeignete und bevorzugte polare, ethylenisch ungesättigte Monomere sind wie oben genannt. Beispiele für einen Block aus Polyethylenglykol sind Polyethylenglykol oder Polyethylenglykolmonoalkylether mit einer Molmasse Mn von 200 bis 10000 g/mol. Beispiele für einen Block aus mindestens einem polaren, ethylenisch ungesättigten Monomer sind Polyvinylpyrrolidon oder Poly(meth)acrylsäure oder Polyethylenglykolmonomethylether(meth)acrylat. Der jeweils andere Block kann aus Polymerblöcken aus dem Stand der Technik aufgebaut sein. Bevorzugt ist der andere Block unpolar, beispielsweise ist er aus Caprolacton oder Propylenoxid aufgebaut. In einer weiteren Ausführungsform enthält der andere Block Polyester (z.B. basierend auf einer Dicarbonsäure und einem Diol), Polyamid (z.B. basierend auf einer Dicarbonsäure und einem Diamin), Polycarbonat, Polyurethan oder Polyharnstoff. Bevorzugte Blockpolymere sind Polyethylenglykol-block-polycaprolacton und Polyethylenglykolmonomethylether-blockpolycaprolacton und Polyproyplenglykol-block-Polyethylenglykol.

Das lineare Polymer kann in einer weiteren Ausführungsform ein Polykondensat enthaltend Polyethylenglykol sein. Der Begriff Polykondensat schließt im Sinne der vorliegenden Erfindung auch Polyadditionsprodukte ein. Beispiele für Polyethylenglykol sind Polyethylenglykol oder Polyethylenglykolmonoalkylether mit einer Molmasse Mn von 200 bis 10000 g/mol. Beispiele für Polykondensate sind Polyether, Polyamide, Polyimide, Polyester, Polycarbonate, Polyurethane und Polyharnstoffe, bevorzugt Polyether und Polyester. Bevorzugtes Polykondensat ist ein Polyether basierend auf C₃-C₂₄ Alkylenoxid, besonders Propylenoxid, und ein Polyester auf Basis von Hydroxycarbonsäureverbindungen, Dialkoholverbindungen oder Disäureverbindungen, besonders Hydroxycarbonsäureverbindungen. Bevorzugte Hydroxycarbonsäureverbindungen sind Lactone, insbesondere C₄ bis C₁₈-Alkyllactone, ganz besonders bevorzugt ε-Capro-lacton.

Das lineare Polymer kann in einer weiteren Ausführungsform ein Polyethylenglykol sein, wobei das Polyethylenglykol über einen Linker mit dem Polyharnstoff verknüpft ist. Bevorzugt ist der Linker ein Polyisocyanat. Beispiele für Polyethylenglykol sind Polyethylenglykol oder Polyethylenglykolmonoalkylether mit einer Molmasse Mn von 200 bis 10000 g/mol, bevorzugt 300-2000 g/mol. Bevorzugt handelt es sich bei dem Polyethylenglykol um ein Polyethylenglykolmono-C₁-C₁₈-alkylether, insbesondere um ein ein Polyethylenglykolmonomethylether.

Unter Kamm-förmigen Polymeren werden hier Kammpolymere verstanden, die üblicherweise an einer linearen Hauptkette in mehr oder weniger regelmäßigen Abständen längere, untereinander nahezu gleichlange Seitenketten, bevorzugt aliphatische Seitenketten, enthalten. Die Molmasse Mn liegt meist im Bereich von 500 bis 100000 g/mol und kann durch GPC ermittelt werden. Das Kamm-förmige Polymer enthält bevorzugt Polyalkylenglykol-mono(meth)acrylat oder Allylalkoholalkoxylat (wie Polyethylenglykol-allylether,) in polymerisierter Form, bevorzugt Polyethylenglykolmonoalkylether(meth)acrylat mit einer Molmasse Mn von 100 bis 5000 g/mol. Besonders bevorzugt enthält das Kammpolymer Polyethylenglykolmonomethylether-acrylat oder Polyethylenglykolmonomethylether-methacrylat mit einer Molmasse Mn von jeweils 100 bis 3000 g/mol, bevorzugt 200 bis 1500 g/mol. Das Kammpolymer kann zusätzlich zu Polyalkylenglykol-mono(meth)acrylat oder Allylalkoholalkoxylate beliebige copolymerisierbare ethylenisch ungesättigte Monomere enthalten. Bevorzugte zusätzliche Monomere sind unpolare Monomere und/oder vorgenannte polare, ethylenisch ungesättigte Monomere. Bevorzugte unpolare Monomere sind C₁-C₂₀-Alkyl(meth)acrylate oder Vinylaromaten mit bis zu 20 C-Atomen. Beispiele umfassen Methyl(meth)acrylat, E-thyl(meth)acrylat, n-Butyl(meth)acrylat, 2-Ethylhexyl(meth)acrylat, Lauryl(meth)acrylat oder 4-t-Butyl-cyclohexyl(meth)acrylat. Als vinylaromatische Verbindungen kommen z.B. Vinyltoluol, α-Butylstyrol, 4-n-Butylstyrol, 4-n-Decylstyrol oder Styrol in Betracht. Bevorzugte zusätzliche Monomere sind Methy(meth)acrylat, Laurylacrylat, Stearylacrylat, Styrol, Vinylpyrrolidon oder deren Mischungen.

Das lineare oder Kamm-förmige Polymer kann nach allgemein bekannten Verfahren hergestellt werden (beispielsweise aus US 5,556,918 und EP 742 238). In einer Ausführungsform wird das lineare Polymer, das ein Homopolymer oder statistisches Copo-lymer ist enthaltend ein polares, ethylenisch ungesättigtes Monomer, das Blockpolymer enthaltend einen Block aus Polyethylenglykol oder auf Basis mindestens eines polaren, ethylenisch ungesättigten Monomer, sowie das Kammpolymer durch radikalisch initiierte Lösungspolymerisation der Monomere in Gegenwart eines Initiators und gegebenenfalls eines Reglers hergestellt. Bevorzugt wird dabei ein Initiator verwendet, der beim Zerfall ein Hydroxyl-Radikal (OH-Radikal) bildet und/oder ein Regler der eine OH-Gruppe oder eine NH₂-Gruppe enthält. Diese OH- oder NH₂-Gruppen können später als Linker-reaktive Gruppe verwendet werden.

Geeignete Initiatoren sind organische Hydroperoxide wie tert.-Butylhydroperoxid, Tetrahydrofuranhydroperoxid, Cumolhydroperoxid oder 2,2'-Azobis(2-methyl-N-(2-hydroxyethyl)propionamid). Geeignete Regler sind Aminoalkohole, Aminophenole und insbesondere Thioalkanole wie 3-Hydroxypropanthiol, 3-Mercapto-1,2-propandiol, 2-Hydroxyethyl-3-mercaptopropionsäureester und vor allem 2-Hydroxyethanthiol (Mercaptoethanol). Sofern ein derartiger Regler eingesetzt wird, kann die Polymerisation auch in Gegenwart eines konventionellen Initiators durchgeführt werden, beispielsweise eines konventionellen Azostarters oder eines organischen Peroxids wie Azobis-(isobutyronitril), Di-(tert.-butyl)peroxid, Didecanoylperoxid, Dibenzoylperoxid, Peressigsäure-tert.-butylester oder 2-Methylperpropionsäure-tert.-butylester. Sofern man die Polymerisation in Gegenwart eines der vorgenannten Regler durchführt, wird man den Regler in der Regel in einer Menge von 0,1 bis 12 Gew.-%, häufig 0,2 bis 8 Gew.-% und insbesondere 0,5 bis 5 Gew.-%, bezogen auf die Gesamtmenge der Monomere einsetzen. Initiatoren werden in der Regel in einer Menge von 0,05 bis 5 Gew.-%, häufig 0,1 bis 4 Gew.-% und besonders bevorzugt in einer Menge von 0,2 bis 3 Gew.-%, bezogen auf die zu polymerisierenden Monomere eingesetzt. Wegen weiterer Details wird insbesondere auf die Seite 3 der EP 742 238 verwiesen, auf deren Offenbarung Bezug genommen wird.

Die Verknüpfung der linearen oder Kamm-förmigen Polymere mit dem dendritischen Polyharnstoff gelingt bevorzugt mit Hilfe eines difunktionellen Linkers. Meist wird dabei zunächst der Linker mit dem linearen oder Kamm-förmigen Polymer kovalent verbunden, um anschließend das Linker-haltige Polymer an den dendritischen Polyharnstoff anzukuppeln. Damit das Linker-haltige Polymer hergestellt werden kann, enthält das Ausgangspolymer meist eine Gruppe, die mit dem Linker reagieren kann (Linker-reaktive Gruppe). Die mittlere Anzahl der Linker-reaktiven Gruppen beträgt in der Regel nicht mehr als zwei und liegt vorzugsweise im Bereich von 0,3 bis 1,8, insbesondere im Bereich von 0,5 bis 1,5 und speziell im Bereich von 0,6 bis 1,4 pro Polymermolekül. Die Linker-reaktive Gruppe kann in der Polymerkette angeordnet sein oder befindet sich vorzugsweise am Ende der Polymerkette.

Im Falle eines linearen Polymers, das ein Homopolymer oder statistisches Copolymer ist enthaltend ein polares, ethylenisch ungesättigtes Monomer, ein Blockpolymer enthaltend einen Block aus Polyethylenglykol oder auf Basis mindestens eines polaren, ethylenisch ungesättigten Monomers, oder eines Kammpolymers kann die Linker-reaktive Gruppe wie vorbeschrieben über einen geeigneten Initiator und/oder Regler eingeführt werden. Alternativ kann die Linker-reaktive Gruppe über eine kontrollierte radikalische Reaktion nach dem Stand der Technik (wie Atom Transfer Radical Polymerization (ATRP), Reversible Addition Fragmentation Chain Transfer Polymerization (RAFT), oder Nitroxide Mediated Polymerization (NMP)) gezielt am Kettenende eingeführt werden. Ebenso ist es möglich, dass eine funktionelle Gruppe in der Polymerkette als Linker-reaktive Gruppe verwendet wird, beispielsweise eine von gegebenenfalls mehreren OH-Gruppen eines einpolymerisierten Hydroxyethyl(meth)acrylats.

Im Falle eines Polykondensats enthaltend Polyethylenglykol kann eine Linker-reaktive Gruppe am Kettenende des Polykondensats erzeugt werden durch eine geeignete Stöchiometrie und Einsatz eines monofunktionellen Monomers. Bevorzugt wird die Linker-reaktive Gruppe durch ring-öffnende Polymerisation eines Lactons erzeugt, so dass genau eine funktionelle Hydroxygruppe am Kettenende entsteht.

Im Falle eines Polyethylenglykol kann als Linker-reaktive Gruppe eine Hydroxy-Gruppe am Kettenende verwendet werden. Bevorzugt werden Polyethylenglykolmonoalkylether, die genau eine Linker-reaktive Gruppe am Kettenende haben.

Allgemein kommen als difunktionelle Linker reaktive polyfunktionelle Verbindungen in Betracht mit mindestens zwei reaktiven Gruppen. Bevorzugte Linker sind Polyisocyanate mit einer Funktionalität bezüglich der Isocyanatgruppen von wenigstens 1,5, insbesondere 1,5 bis 4,5 und speziell 1,8 bis 3,5 umfassen aliphatische, cycloaliphatische und aromatische Di- und Polyisocyanate sowie die Isocyanurate, Allophanate, Uretdione und Biurete von aliphatischen, cycloaliphatischen und aromatischen Diisocyanaten. Vorzugsweise weisen die Polyisocyanate im Mittel 1,8 bis 3,5 Isocyanatgruppen pro Molekül auf. Beispiele für geeignete Polyisocyanate sind aromatische Diisocyanate wie Toluylen-2,4-diisocyanat, Toluylen-2,6-diisocyanat, kommerziell erhältliche Mischungen von Toluylen-2,4- und -2,6-diisocyanat (TDI), Phenylendiisocyanat, 3,3'-Diphenyl-4,4'-biphenylendiisocyanat, 4,4'-Biphenylendiisocyanat, 4,4'-Diphenylmethandiisocyanat, 2,4'-Diphenylmethandiisocyanat, 3,3'-Dichlor-4,4'-biphenylendiisocyanat, Cumen-2,4-diisocyanat, 1,5-Naphthalindiisocyanat, p-Xylylendiisocyanat, p-Phenylendiisocyanat, 4-Methoxy-1,3-phenylendiisocyanat, 4-Chlor-1,3-phenylendiisocyanat, 4-Ethoxy-1,3-phenylendiisocyanat, 2,4-Dimethylen-1,3-phenylendiisocyanat, 5,6-Dimethyl-1,3-phenylendiisocyanat, 2,4-Diisocyanatodiphenylether, aliphatische Diisocyanate wie Ethylendiisocyanat, Ethylidendiisocyanat, Propylen-1,2-diisocyanat, 1,6-Hexamethylendiisocyanat (HDI), 1,4-Tetramethylendiisocyanat, 1,10-Decamethylendiisocyanat und cycloaliphatische Diisocyanate, wie Isophorondiisocyanat (IPDI), Cyclohexan-1,2-diisocyanat, Cyclohexan-1,4-diisocyanat und Bis(4,4'-Isocyanatocyclohexyl)methan. Unter den Polyisocyanaten sind solche bevorzugt, deren Isocyanatgruppen sich in ihrer Reaktivität unterscheiden, wie Toluylen-2,4-diisocyanat, Toluylen-2,6-diisocyanat, 2,4'-Diphenylmethandiisocyanat, Isophorondiisocyanat, oder Mischungen dieser Verbindungen.

Die Reaktionsbedingungen der Umsetzung mit dem Polyisocyanat hängen von der Art der Linker-reaktiven Gruppe des linearen oder Kamm-förmigen bzw. des dendritischen Polymers ab. Die Umsetzung kann prinzipiell in Schmelze oder in einem organischen Lösungsmittel durchgeführt werden. Handelt es sich bei der Linker-reaktiven Gruppe des linearen oder Kamm-förmigen Polymers um eine Hydroxyl-Gruppe, so finden Umsetzungen mit dem Linker bevorzugt in einem aprotisch-polaren organischen Lösungsmittel oder Gemischen solcher Lösungsmittel statt. Beispiele sind Ketone (beispielsweise Aceton), Butylacetat, Tetrahydrofuran (THF), Xylol, Chlorbenzol, Dimethylsulfoxid (DMSO) oder Dimethylformamid (DMF). Bevorzugte Lösungsmittel sind Butylacetat, Tetrahydrofuran, Xylol und Aceton. Die Umsetzung erfolgt üblicherweise bei erhöhten Temperaturen, wobei sich dieTemperatur auch nach der Siedetemperatur des gewählten Lösungsmittels richtet. Die Umsetzung des Polyisocyanats mit der ersten Komponente kann bei 20 bis 80 °C, gewünschtenfalls aber auch bis 100 °C erfolgen, sofern die erste Komponente über eine Hydroxyl-Gruppe als Linker-reaktive Gruppe verfügt.

Die Umsetzung der weiteren Isocyanatgruppe mit der Linker-reaktiven Gruppe des dendritischen Polyharnstoffs erfolgt bevorzugt bei Temperaturen von -20 bis 40 °C, sofern es sich bei den Linker-reaktiven Gruppen des Polyharnstoffs um AminoGruppen handelt. In diesem Fall kann die Umsetzung wiederum in Schmelze oder in einem organischen Lösungsmittel durchgeführt werden. Im Unterschied zur Reaktion mit der ersten Komponente (sofern diese über eine Hydroxyl-Gruppen als Linker-reaktive Gruppe verfügt) können als Lösungsmittel nun auch Alkohole zusätzlich zu den bereits aufgeführten Solventien verwendet werden, da die Reaktion der verbliebenen Isocyanat-Gruppe mit einer Amino-Gruppe des Polymers schneller verläuft als die konkurrierende Reaktion mit einer Hydroxylgruppe der alkoholischen Lösungsmittelkomponente. Bevorzugte Alkohole sind Methanol, Ethanol, Isopropanol, n-Propanol, n-Butanol, iso-Butanol und tert-Butanol. Ganz besonders bevorzugte Lösungsmittel für die Umsetzung der zweiten Isocyanat-Gruppe mit dem Polyharnstoff sind Lösungsmittelgemische aus Butylacetat, Tetrahydrofuran, Xylol oder Aceton (resultierend aus der ersten Umsetzung) und einem der vorstehend aufgeführten Alkohole (in denen sich der HB Polyharnstoff besonders gut lösen lässt). In einer speziellen Ausführungsform wird die Verknüpfung der linearen oder Kamm-förmigen Polymere mit dem dendritischen Polyharnstoff-Kern ohne Lösungsmittel in Schmelze durchgeführt.

Die Umsetzung kann äquimolar erfolgen, was bedeutet, dass das Mengenverhältnis so gewählt wird, dass pro Mol umzusetzender Hydroxyl-Gruppen des Funktionalisierungsreagenz oder des linearen oder des kammartigen Polymers 1 Mol Diisocyanat eingesetzt wird. Bevorzugt wird mit leichtem (z.B. 0 bis 15 mol%) Überschuss der Hydroxyl-Gruppen gearbeitet, um die Menge an nicht umgesetztem Diisocyanat zu verringern. Ist das radikalische Copolymer über einen Initiator oder Regler OH-funktionalisiert, wird das Diisocyanat äquimolar oder im leichten Unterschuss zu den darüber eingeführten OH-Gruppen umgesetzt. Im Falle symmetrischer Diisocyanate (wie HDI) kann es sich auch empfehlen, einen Überschuss an Diisocyanat einzusetzen und den Überschuss anschliessend destillativ zu entfernen.

Vorzugsweise wird die Umsetzung in Gegenwart eines Katalysators durchgeführt. Als Katalysatoren eignen sich beispielsweise tertiäre Amine, z. B. Triethylamin, Tri-n-propylamin, N-Methylpyrrolidin, N-Methylpiperidin und Diazabicyclooctan (DABCO), Zink-Carboxylate, Wismut-Carboxylate, Titan-Alkoholate, zinnorganische Verbindungen, insbesondere Dialkylzinn(IV)salze von aliphatischen Carbonsäuren wie Dibutylzinndilaurat und Dibutylzinndioctoat, Zinn(II)dialkanoate wie Zinndioctoat, sowie Cäsiumsalze wie Cäsiumacetat. In einer Ausführungsform sind Zink-Carboxylate, Wismut-Carboxylate, Titan-Alkoholate besonders geeignet, wobei die Carboxylate bevorzugt C₁-C₂₀ Carboxylate (wie Formiat, Acetat, Propionat, Hexanoat, Octanoat oder Neodecanoat) sind. Der Katalysator kann in Mengen von 50 bis 50000 ppm, vorzugsweise 100 bis 5000 ppm, bezogen auf gesamten Feststoff, eingesetzt werden.

Die Umsetzung mit den Hydroxyl-Gruppen wird üblicherweise bei erhöhten Temperaturen im Bereich von 40 bis 120 °C durchgeführt. Dagegen erfolgt die Umsetzung mit Amino-Gruppen, insbesondere mit denen des dendritischen Polyharnstoff-Kerns, bevorzugt bei Temperaturen von -20 bis 40 °C. Welche Temperatur im Einzelnen gewählt wird, hängt von der Art des verwendeten organischen Lösungsmittels ab. Das Lösungsmittel kann anschliessend durch Destillation entfernt werden.

Üblicherweise wird man die Umsetzung so durchführen, dass zunächst die Komponente, die Isocyanatgruppen-funktionalisiert werden soll (beispielweise das lineare oder Kamm-förmige Polymer), mit dem Diisocyanat in Gegenwart des Katalysators und optional eines Lösungsmittels solange umgesetzt wird, bis der Isocyanat-Wert im Reaktionsgemisch auf die Hälfte gesunken ist. Bei Verwendung eines leichten Hydroxylgruppen-Überschusses wird solange umgesetzt, bis der theoretische Endwert dem vollständigen Umsatz der Hydroxyl-Gruppen entspricht. Dies lässt sich auf bekannte Weise beispielsweise titrimetrisch ermitteln. Danach erfolgt dann die Zugabe der anderen Komponente (beispielsweise hyperverzweigter Polyharnstoff mit Amino-Gruppen). Das molare Verhältnis von dendritischem Polyharnstoff zur Summe aus linearem Polymer und Kamm-förmigem Polymer liegt dabei im Bereich von 1 : 1 bis 1 : 100, bevorzugt 1 : 1 bis 1 : 50, besonders bevorzugt 1 : 1 bis 1 : 25. Die Reaktion wird fortgeführt, bis der Isocyanatwert auf Null gesunken ist.

Die erfindungsgemäße Zusammensetzung ist erhältlich indem man das Amphiphil und den Wirkstoff, der in Wasser bei 20 °C zu höchstens 10 g/L löslich ist, in Kontakt bringt, wobei das Amphiphil ein dendritischen Polyharnstoff enthält, der verknüpft ist mit mindestens einem linearen oder Kamm-förmigen Polymer, und die Verknüpfung über einen difunktionellen Linker erfolgt, falls das lineare Polymer aus einem Polyalkylenoxid besteht. Die Komponenten können durch allgemein bekannte Methoden, wie Mischen, Emulgieren oder Suspendieren, in Kontakt gebracht werden.

Das Gewichtsverhältnis von Wirkstoff zu Amphiphil liegt meist im Bereich von 100 : 1 bis 1 : 100, bevorzugt 10 : 1 bis 1 : 50, besonders bevorzugt 2 : 1 bis 1 : 25. Der Wirkstoff kann in gelöster Form oder in fester, partikulärer Form vorliegen. Die Wirkstoffpartikel können kristallin oder amorph sein. Die Partikelgröße kann 1 nm bis 10 µm betragen. Die Zusammensetzung kann eine Lösung, Emulsion, Suspension oder Suspoemulsion des Wirkstoffs sein. Die erfindungsgemäße Zusammensetzung ist bevorzugt eine wässrige Zusammensetzung. Bevorzugt enthält sie mindestens 40 Gew.%, besonders bevorzugt mindestens 60 Gew.%, und insbesondere mindestens 80 Gew.% Wasser. Üblicherweise enthält die Zusammensetzung höchstens 99 Gew.% Wasser.

Die erfindungsgemäße Zusammensetzung kann Formulierungshilfsmittel enthalten, wobei sich die Wahl der Hilfsmittel üblicherweise nach der konkreten Anwendungsform bzw. dem Wirkstoff richtet. Beispiele für geeignete Formulierungshilfsmittel sind Lösungsmittel, feste Trägerstoffe, oberflächenaktive Stoffe (wie Tenside, Schutzkolloide, Netzmittel und Haftmittel), organische und anorganische Verdicker, Bakterizide, Frostschutzmittel, Entschäumer, ggf. Farbstoffe und Kleber (z. B. für Saatgutbehandlung). Als oberflächenaktive Stoffe (Adjuvantien, Netz-, Haft-, Dispergieroder Emulgiermittel) kommen die Alkali-, Erdalkali-, Ammoniumsalze von aromatischen Sulfonsäuren, z. B. von Lignin-(Borresperse^{®}-Typen, Borregaard, Norwegen), Phenol-, Naphthalin-(Morwet^{®}-Typen, Akzo Nobel, USA) und Dibutylnaphthalinsulfonsäure (Nekal^{®}-Typen, BASF, Deutschland), sowie von Fettsäuren, Alkyl- und Alkylarylsulfonaten, Alkyl-, Lauryletherund Fettalkoholsulfaten, sowie Salze sulfatierter Hexa-, Heptaund Octadecanole sowie von Fettalkoholglykolethern, Kondensationsprodukte von sulfoniertem Naphthalin und seiner Derivate mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenyl-, Tributylphenylpolyglykolether, Alkylarylpolyetheralkohole, Isotridecylalkohol, Fettalkoholethylenoxid-Kondensate, ethoxyliertes Rizinusöl, Polyoxyethylenoder Polyoxypropylenalkylether, Laurylalkoholpolyglykoletheracetat, Sorbitester, Lignin-Sulfitablaugen sowie Proteine, denaturierte Proteine, Polysaccharide (z.B. Methylcellulose), hydrophob modifizierte Stärken, Polyvinylalkohol (Mowiol^{®}-Typen, Clariant, Schweiz), Polycarboxylate (Sokalan^{®}-Typen, BASF, Deutschland), Polyalkoxylate, Polyvinylamin (Lupamin^{®}-Typen, BASF, Deutschland), Polyethylenimin (Lupasol^{®}-Typen, BASF, Deutschland), Polyvinylpyrrolidon und deren Copolymere in Betracht.

Als Tenside kommen insbesondere anionische, kationische, nicht-ionische und amphotere Tenside, Blockpolymere und Polyelektrolyte in Betracht. Geeignete anionische Tenside sind Alkali-, Erdalkali- oder Ammoniumsalze von Sulfonaten, Sulfaten, Phosphaten oder Carboxylaten. Beispiele für Sulfonate sind Alkylarylsulfonate, Diphenylsulfonate, alpha-Olefinsulfonate, Sulfonate von Fettsäuren und Ölen, Sulfonate von ethoxylierten Alkylphenolen, Sulfonate von kondensierten Naphthalinen, Sulfonate von Dodecyl und Tridecylbenzolen, Sulfonate von Naphthalinen und Alkylnaphthalinen, Sulfosuccinate oder Sulfosuccinamate. Beispiele für Sulfate sind Sulfate von Fettsäuren und Ölen, von ethoxylierten Alkylphenolen, von Alkoholen, von ethoxylierten Alkoholen, oder von Fettsäureestern. Beispiele für Phosphate sind Phosphatester. Beispiele für Carboxylate sind Alkylcarboxylate und carboxylierte Alkohol- oder Alkylphenolethoxylate.

Geeignete nicht-ionische Tenside sind Alkoxylate, N-alkylierte Fettsäureamide, Aminoxide, Ester oder Zucker-basierte Tenside. Beispiele für Alkoxylate sind Verbindungen, wie Alkohole, Alkylphenole, Amine, Amide, Arylphenole, Fettsäuren oder Fettsäureester, die alkoxyliert wurden. Zur Alkoxylierung kann Ethylenoxid und/oder Propylenoxid eingesetzt werden, bevorzugt Ethylenoxid. Beispiele für N-alkylierte Fettsäureamide sind Fettsäureglucamide oder Fettsäurealkanolamide. Beispiele für Ester sind Fettsäureester, Glycerinester oder Monoglyceride. Beispiele für Zucker-basierte Tenside sind Sorbitane, ethoxilierte Sorbitane, Saccharose- und Glucoseester oder Alkylpolyglucoside. Geeignete kationische Tenside sind quarternäre Tenside, beispielsweise quartäre Ammonium-Verbindungen mit einer oder zwei hydrophoben Gruppen, oder Salze langkettiger primärer Amine. Geeignete amphotere Tenside sind Alkylbetaine und Imidazoline. Geeignete Blockpolymere sind Blockpolymere vom A-B oder A-B-A Typ umfassend Blöcke aus Polyethylenoxid und Polypropylenoxid oder vom A-B-C Typ umfassend Alkanol, Polyethylenoxid und Polypropylenoxid. Geeignete Polyelektrolyte sind Polysäuren oder Polybasen. Beispiele für Polysäuren sind Alkalisalze von Polyacrylsäure. Beispiele für Polybasen sind Polyvinylamine oder Polyethylenamine.

Die erfindungsgemäße Zusammensetzung kann hohe Mengen oberflächenaktiver Stoffe und Tensid umfassen. Sie kann 0,1 bis 40 Gew.%, bevorzugt 1 bis 30 und insbesondere 2 bis 20 Gew.% Gesamtmenge von oberflächenaktiven Stoffe und Tensiden umfassen bezogen auf die Gesamtmenge der Zusammensetzung.

Beispiele für Adjuvantien sind organisch modifizierte Polysiloxane, wie BreakThruS 240^{®}; Alkoholalkoxylate, wie Atplus^{®}245, Atplus^{®}MBA 1303, Plurafac^{®}LF und Lutensol^{®} ON ; EO-PO-Blockpolymerisate, z. B. Pluronic^{®} RPE 2035 und Genapol^{®} B; Alkoholethoxylate, z. B. Lutensol^{®} XP 80; und Natriumdioctylsulfosuccinat, z. B. Leophen^{®} RA.

Beispiele für Verdicker (d. h. Verbindungen, die der Zusammensetzung ein modifiziertes Fließverhalten verleihen, d. h. hohe Viskosität im Ruhezustand und niedrige Viskosität im bewegten Zustand) sind Polysaccharide sowie organische und anorganische Schichtmineralien wie Xanthan Gum (Kelzan^{®}, CP Kelco), Rhodopol^{®} 23 (Rhodia) oder Veegum^{®} (R.T. Vanderbilt) oder Attaclay^{®} (Engelhard Corp.).

In einer bevorzugten Ausführungsform ist der Wirkstoff ein Pestizid und die erfindungsgemäßen Zusammensetzungen liegen in Form einer agrochemischen Formulierung vor. Geeignete agrochemische Formulierungen sind wasserlösliche Konzentrate (SL, LS), redispergierbare Konzentrate (DC), emulgierbare Konzentrate (EC), Emulsionen (EW, EO, ES, ME), Suspensionen (SC, OD, FS) oder Suspoemulsionen (SE). Bevorzugt liegt die Zusammensetzung vor in Form eines emulgierbaren Konzentrates (EC), eines Suspensionskonzentrats (SC), eines wasserlöslichen Konzentrats (SL), einer Lösung für Saatgutbehandlung (LS), oder eines redispergierbaren Konzentrats (DC).

Die agrochemische Formulierung wird meist vor der Anwendung verdünnt um den sogenannten Tankmix herzustellen. Zur Verdünnung kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht. Bevorzugt wird Wasser verwendet. Es ist auch möglich, das Amphiphil erst dem Tankmix zuzusetzen. In dieser Ausführungsform liegt die erfindungsgemäße Zusammensetzung in Form eines Tankmixes vor.

Die verdünnte Zusammensetzung wird üblicherweise durch Versprühen oder Vernebeln angewendet. Zu dem Tankmix können Öle verschiedenen Typs, Netzmittel, Adjuvants, Herbizide, Bakterizide, Fungizide unmittelbar vor der Anwendung (Tankmix) zugesetzt werden. Diese Mittel können zu den erfindungsgemäßen Zusammensetzungen im Gewichtsverhältnis 1:100 bis 100:1, bevorzugt 1:10 bis 10:1 zugemischt werden. Die Pestizidkonzentration im Tankmix kann in größeren Bereichen variiert werden. Im Allgemeinen liegen sie zwischen 0,0001 und 10%, vorzugsweise zwischen 0,01 und 1 %. Die Aufwandmengen liegen bei der Anwendung im Pflanzenschutz je nach Art des gewünschten Effektes zwischen 0,01 und 2,0 kg Wirkstoff pro ha.

Die Verwendung der agrochemischen Formulierungen ist möglich zur Bekämpfung von phytopathogenen Pilzen und/oder unerwünschtem Pflanzenwuchs und/oder unerwünschtem Insekten- oder Milbenbefall und/oder zur Regulation des Wachstums von Pflanzen, wobei man die Zusammensetzung auf die jeweiligen Schädlinge, deren Lebensraum oder die vor dem jeweiligen Schädling zu schützenden Pflanzen, den Boden und/oder auf unerwünschte Pflanzen und/oder die Nutzpflanzen und/oder deren Lebensraum einwirken lässt. Weiterhin ist die Verwendung der agrochemischen Formulierungen möglich zur Bekämpfung von unerwünschtem Insekten- oder Milbenbefall auf Pflanzen und/oder zur Bekämpfung von phytopathogenen Pilzen und/oder zur Bekämpfung unerwünschten Pflanzenwuchs, wobei man Saatgüter von Nutzpflanzen mit der Zusammensetzung behandelt.

Die Erfindung betrifft auch ein Amphiphil enthaltend einen dendritischen Polyharnstoff, wobei der dendritische Polyharnstoff verknüpft ist mit mindestens einem linearen oder Kamm-förmigen Polymer, und die Verknüpfung über einen difunktionellen Linker erfolgt, falls die Wiederholungseinheiten des linearen Polymers aus polymerisiertem Alkylenoxid bestehen. Der Polyharnstoff ist bevorzugt aus einem Polyisocyanat und einem hydrophoben Polyamin aufgebaut, und das hydrophobe Polyamin weist außer Stickstoff in Form primärer Aminogruppen keine weiteren Heteroatome auf.

Bevorzugt ist ein Amphiphil enthaltend einen dendritischen Polyharnstoff, der verknüpft ist mit mindestens einem linearen oder Kamm-förmigen Polymer, wobei das lineare Polymer
a) ein Homopolymer oder statistisches Copolymer enthaltend ein polares, ethylenisch ungesättigtes Monomer,
b) ein Blockpolymer enthaltend einen Block aus Polyethylenglykol oder auf Basis eines polaren, ethylenisch ungesättigten Monomer,
c) ein Polykondensat enthaltend Polyethylenglykol, oder
d) ein Polyethylenglykol
ist, wobei das Polyethylenglykol d) über einen difunktionellen Linker mit dem Polyharnstoff verknüpft ist. Geeignete und bevorzugte lineare oder Kamm-förmige Polymere sind wie vorstehend beschrieben. Besonders bevorzugt ist das lineare Polymer eines der vorgenannten Polymere a), b) oder c). In einer weiteren besonders bevorzugten Ausführungsform ist das lineare Polymer eines der vorgenannten Polymere a), c) oder d). Ganz besonders bevorzugt ist das lineare Polymer eines der vorgenannten Polymere a) oder c). Speziell bevorzugt enthält das Kamm-förmige Polymer Polyethylenglykolmono(meth)acrylat in polymerisierter Form. Bevorzugter Linker ist ein Polyisocyanat. Weitere bevorzugte Ausführungsformen des dendritischen Polyharnstoffs sind vorstehend beschrieben.

Die Erfindung betrifft auch ein Verfahren zur Herstellung des erfindungsgemäßen Amphiphils indem man
a) den Polyharnstoff mit dem linearen oder Kamm-förmigen Polymer umsetzt, oder
b) den Polyharnstoff mit einem Monomer umsetzt, das durch Ringöffnende Polymersiation einen Teil des linearen oder Kamm-förmigen (bevorzugt linearen) Polymers bilden kann.

Bevorzugt ist Variante a).

Geeignete Monomere für Variante b) sind beispielsweise Lactone, Lactide oder Oxazolidine, bevorzugt ε-Caprolacton. Im Anschluss an die Ringöffnende Polymerisation in Variante b) wird das so entstandene Teilpolymer üblicherweise weiter umgesetzt um den erfindungsgemäße Amphiphil zu erhalten. Beispielsweise kann die weitere Umsetzung eine übliche Alkoxylierung (z.B. mit Ethylenoxid) sein.

Gemäß Herstellvariante a) wird bevorzugt das lineare oder Kamm-förmige Polymer und ein difunktioneller Linker umgesetzt. Bevorzugte difunktionelle Linker und Umsetzungsbedingungen sind wie vorstehend beschrieben. Gemäß einer besonders bevorzugten Variante a) ist das Amphiphil erhältlich durch
i) Bereitstellung des dendritischen Polyharnstoffs und des linearen oder Kamm-förmigen Polymers, und anschließend
ii) Verknüpfung der Komponenten mit dem difunktionellen Linker.

Besonders bevorzugt wird das Amphiphil auf diese Weise erhalten. Der difunktionelle Linker ist bevorzugt ein Diisocyanat.

Vorteile der vorliegenden Erfindung sind, dass eine hohe Konzentration von Wirkstoff in Lösung gebracht werden kann, dass die Herstellung des Amphiphils aus vorgefertigten Polymeren sehr einfach und großtechnisch mittels einem Linker möglich ist, dass die linearen oder Kamm-förmigen Polymere (insbesondere die statistischen Copolymere und die polaren Homopolymere sowie Polyethylenglykol) sehr einfach zugänglich sind und sogar auf bestimmte Amphiphile optimiert werden können, oder dass das Amphiphil selbst wasserlöslich oder wasserdispergierbar ist.

Gegenüber der direkten Alkoxylierung des dendritischen Polyharnstoffs bietet das erfindungsgemäße Verfahren die Vorteile, dass
i) der Polyharnstoff problemlos in Alkoholen als Lösungsmittel mit dem Linkermodifizierten Polyethylenglykol umgesetzt werden kann, da die Amino-Gruppe eine höhere Reaktivität gegenüber der Isocyanat-Gruppe aufweist als die Hydroxyl-Gruppe des Lösungsmittels; Alkohole als Lösungsmittel für die dendritischen Polyharnstoffe sind notwendig, da diese sich nicht in gängigen, unpolareren organischen Lösungsmitteln (Aceton, Tetrahydrofuran, Butylacetat, Xylol, Toluol) lösen; die Verwendung von toxischen oder hochsiedenden dipolar-aprotischen Lösungsmitteln wie Dimethylformamid oder Dimethylsulfoxid führt zu Nebenreaktionen (KOH-Katalysator zersetzt Lösungsmittel).
ii) der Polyharnstoff mit PEG-Ketten derselben Kettenlänge funktionalisiert wird (diese sind "vorgefertig" mit extrem enger MW Verteilung erhältlich); bei der Alkoxylierung tritt dagegen das Problem auf, dass die zunächst ablaufende Umsetzung einer Aminogruppe mit 2 EO Einheiten zu einer Aminodiol-Gruppe führt, welche nun gleichzeitig selbst (allerdings langsamer) mit EO weiterreagieren kann, dadurch entstehen unterschiedlich lange Ketten (auch bedingt durch die sterischen Verhältnisse im Polymer etc.).
iii) das erfindungsgemäß hergestellte Amphiphil durch den Linker selbst in seiner Amphiphilie bzw. seinen Anwendungseigenschaften maßgeschneidert werden kann (z.B. Isophorondiisocyanat-Linker erhöht hydrophoben Anteil des resultierenden Amphiphils und verbessert dadurch die Wirkstoffaufnahme via hydrophober Wechselwirkungen).

Weitere Vorteile sind, dass die Bioverfügbartkeit der Wirkstoffe erhöht wird, dass der systemische Effekt der agrochemischen Wirkstoffe bei foliarer Aufnahme erhöht wird, dass sogar schwerlösliche agrochemische Wirkstoffe nun gelöst formuliert werden können, beispielsweise als SL (wasserlösliches Konzentrat) oder LS (Lösung für Saatgutbehandlung), dass die Verteilung der agrochemischen Wirkstoffe in der Sprühlösung verbessert ist, und dass die Mehrwegverpackungen der Wirkstoffe und die Applikationsgeräte (z.B. die Sprühgeräte für Pestizide) besser mit Wasser gereinigt werden können.

Nachfolgende Beispiele erläutern die Erfindung ohne sie einzuschränken.

### Beispiele

Basonat® HI 100: Polyisocyanurat auf Basis Hexamethylendiisocyanat, NCO Gehalt nach DIN EN ISO 11909 21,5 Gew.%, Viskosität bei 23 °C nach DIN EN ISO 3219 3500 mPas, kommerziell erhältlich von BASF SE.
DBTL: Di-n-butylzinndilaurat
IPDI: Isophorondiisocyanat
PEGMEMA 475: Polyethylenglykolmonomethylethermethacrylat (M = 475 g/mol)
PEGMEMA 1100: Polyethylenglykolmonomethylethermethacrylat (M = 1100 g/mol) AIBN: Azo-bis-(isobutyronitril)

Die hyperverzweigten Polymere wurden per Gelpermeationschromatographie mit einem Refraktometer als Detektor analysiert. Als mobile Phase wurde Hexafluorisopropanol verwendet, als Standard zur Bestimmung des Molekulargewichts wurde Polymethylmetacrylat (PMMA) eingesetzt. Die Bestimmung der Amin-Zahlen (angegeben ist im Folgenden stets die primäre Aminzahl) erfolgte nach DIN EN 13717. Die Molmassen der erfindungsgemäßen Polymere wurden rechnerisch aus dem zahlenmittleren Molekulargewicht des zugrundeliegenden hyperverzweigten Kernmoleküls, dessen Amin-Zahl und dem gewählten Funktionalisierungsgrad (stöchiometrisches Verhältnis von NCO-Gruppen der funktionellen linearen Polymere zu verfügbare Amin-Gruppen des Kernmoleküls) bestimmt unter Annahme einer quantitativen Additionsreaktion der Linker-reaktiven Gruppen an den Linker.

### Synthesebeispiel 1: Hyperverzeigter Polyharnstoff mit terminalen Aminogruppen (A.1)

Es wurden unter Begasung mit trockenem Stickstoff 135,8 g Basonat® HI 100 vorgelegt und unter Rühren auf 80 °C erwärmt. Dann wurden unter ständigem Rühren über einen Zeitraum von 2 h 104,5 g wasserfreies n-Butanol so zugegeben, dass die Temperatur der Reaktionsmischung 80 °C nicht überschritt. Nach beendeter Zugabe wurde noch 1 h bei 80 °C gerührt. Anschließend wurde der Ansatz auf 60 °C abgekühlt und mit 59,7 g Isophorondiamin und 0,1 g Kaliumhydroxid (gelöst in 2,0 mL n-Butanol) versetzt. Die Reaktionsmischung wurde nachfolgend für 11,5 h bei 150 °C gerührt, bevor weitere 0,2 g Kaliumhydroxid zugegeben wurden und für weitere 2 h bei 150 °C gerüht wurde. Über die Reaktionszeit wurde der Aminverbrauch in der Reaktionsmischung über Titration mit 0,1 N HCl verfolgt und so der Umsatz gegenüber dem theoretisch möglichen Vollumsatz prozentual ermittelt. Nach Erreichen eines Umsatzes von 60% wurde die Reaktion durch Abkühlen des Reaktionsgemisches auf RT abgebrochen. Das n-Butanol enthaltende Polymer A.1 (Mn = 1710 g/mol; Mw = 3860 g/mol; AminZahl: 36 mg KOH/g Polymer) wurde in Form einer gelb gefärbten, hoch viskosen Flüssigkeit erhalten, welche nicht wasserlöslich war.

### Synthesebeispiel 2: Hyperverzweigter Polyharnstoff mit terminalen Aminogruppen (A.2)

Stufe 1 (A.2a): Es wurden unter Begasung mit trockenem Stickstoff 1499,1 g Basonat® HI 100 vorgelegt und unter Rühren auf 80 °C erwärmt. Dann wurden unter ständigem Rühren über einen Zeitraum von 3,0 h 1155,9 g n-Butanol so zugegeben, dass die Temperatur der Reaktionsmischung 80 °C nicht überschritt. Nach beendeter Zugabe wurde noch 30 Minuten bei 78 °C gerührt bevor das Reaktionsgemisch auf RT abgekühlt wurde.

Stufe 2 (A.2): Es wurden unter Begasung mit trockenem Stickstoff 146,4 g des Reaktionsprodukts A.2a und 36,4 g Isophorondiamin vorgelegt. Nach Zugabe von 0,1 g Kaliumhydroxid (gelöst in 2 ml n-Butanol) als Katalysator wurde der Reaktionsansatz unter Rühren auf 150 °C erhitzt und 12 h bei dieser Temperatur gerührt bevor die Reaktion durch Abkühlen auf RT abgebrochen wurde..

Das Polymer A.2 (Mn = 3600 g/mol; Mw = 12100 g/mol; Amin-Zahl: 25 mg KOH/g Polymer) wurde in Form einer gelb gefärbten, hoch viskosen Flüssigkeit erhalten, welche nicht wasserlöslich war.

### Synthesebeispiel 3: Hyperverzweigter Polyharnstoff mit terminalen Aminogruppen (A.3)

Stufe 1 (A.3a): Es wurden unter Begasung mit trockenem Stickstoff 1499,1 g Basonat® HI 100 vorgelegt und unter Rühren auf 80 °C erwärmt. Dann wurden unter ständigem Rühren über einen Zeitraum von 3,0 h 1155,9 g n-Butanol so zugegeben, dass die Temperatur der Reaktionsmischung 80 °C nicht überschritt. Nach beendeter Zugabe wurde noch 30 Minuten bei 78 °C gerührt bevor das Reaktionsgemisch auf RT abgekühlt wurde.

Stufe 2 (A.3): Es wurden 240 g des Reaktionsproduktes A.3a und 59,7 g Isophorondiamin vorgelegt und mit 0,02 g DBTL als Katalysator versetzt. Die Reaktionsmischung wurde unter Rühren auf 160 °C erhitzt und für 2 h bei dieser Temperatur gerührt, wobei bei der Reaktion freiwerdendes n-Butanol destillativ abgetrennt wurde. Während dieser Zeit wurde der Aminverbrauch in der Reaktionsmischung über Titration mit 0,1 N HCl verfolgt und so der Umsatz gegenüber dem theoretisch möglichen Vollumsatz prozentual ermittelt. Nach dem Erreichen eines Umsatzes von 47% wurde die Reaktion durch Abkühlen auf RT abgebrochen und während des Abkühlprozesses mit 100 ml n-Butanol verdünnt.

Das n-Butanol enthaltende Polymer A.3 (Mn = 2600 g/mol; Mw = 10200 g/mol; AminZahl: 55 mg KOH/g Polymer) wurde in Form einer gelb gefärbten, hoch viskosen Flüssigkeit erhalten, welche nicht wasserlöslich war.

### Synthesebeispiel 4: Hyperverzweigter Polyharnstoff mit terminalen Aminogruppen (A.4)

Es wurden unter Begasung mit trockenem Stickstoff 129,3 g Basonat®HI 100 vorgelegt und unter Rühren auf 80 °C erwärmt. Dann wurden unter ständigem Rühren über einen Zeitraum von 1,5 h 99,6 g n-Butanol so zugegeben, dass die Temperatur der Reaktionsmischung 80 °C nicht überschritt. Nach beendeter Zugabe wurde die Reaktionsmischung für weitere 30 min bei 80 °C gerührt. Anschließend wurde der Ansatz auf 60 °C abgekühlt, der Rückflusskühler gegen einen absteigenden Kühler mit Auffanggefäß ausgetauscht und die Reaktionsmischung mit 71,1 g Isophorondiamin und 0,05 g DBTL versetzt. Die Reaktionsmischung wurde unter Rühren auf 150 °C erhitzt und für 1,5 h bei dieser Temperatur gerührt, wobei bei der Reaktion freiwerdendes n-Butanol destillativ abgetrennt wurde. Während dieser Zeit wurde der Aminverbrauch in der Reaktionsmischung über Titration mit 0,1 N HCl verfolgt und so der Umsatz gegenüber dem theoretisch möglichen Vollumsatz prozentual ermittelt. Nach dem Erreichen eines Umsatzes von 35% wurde die Reaktion durch Abkühlen auf RT abgebrochen und während des Abkühlprozesses mit 100 ml n-Butanol verdünnt.

Das n-Butanol enthaltende Polymer A.4 (Mn = 2200 g/mol; Mw = 6600 g/mol; AminZahl: 33 mg KOH/g Polymer) wurde in Form einer gelb gefärbten, hoch viskosen Flüssigkeit erhalten, welche nicht wasserlöslich war.

### Synthesebeispiel 5: Copolymer basierend auf einem hydrophoben hyperverzweigten Polyharnstoff-Kern (A.1) und linearen PEG-Ketten, Funktionalisierungsgrad 100% (A.5)

Stufe 1 (A.5a): 123,5 g Polyethylenglykolmonomethylether (Mn = 500 g/mol) wurde vorgelegt und im Vakuum bei 80 °C von Wasserresten befreit. Nach dem Abkülen auf Raumtemperatur wurde der Ansatz unter Stickstoff gesetzt und das Polymer in 123,5 g Butylacetat gelöst. Nun wurden 50,0 g Isophorondiisocyanat zugegeben und das Gemisch auf 50 °C erhitzt. Durch Zugabe von 19 mg Zink-neodecanoat gelöst in 1 mL Butylacetat, wurde die Reaktion gestartet und im Verlauf von 3,5 h bei 50 °C bis auf einen NCO-Gehalt von 2,87 % gefahren. Anschließend wurde die Reaktion durch Abkühlen auf -20 °C beendet. Das Umsetzungsprodukt A.5a wurde ohne weitere Aufarbeitung direkt in Stufe 2 eingesetzt.

Stufe 2 (A.5): 4,0 g des Polyharnstoff-Kerns A.1 wurden vorgelegt, unter Stickstoff in 36,0 g iso-Butanol gelöst und mit 3,9 g des Reaktionsgemischs A.5a versetzt. Nun wurde der Ansatz 72 Stunden bei 25 °C gerührt. Nach dem vollständigen Umsatz aller NCO-Gruppen (NCO-Gehalt 0 %) wurde das Lösungsmittel im Vakuum entfernt. Schließlich wurde das linear-dendritische Copolymer A.5 (Mn = 2490 g/mol) in Form einer gelb gefärbten, hoch viskosen Flüssigkeit erhalten, welche vollständig wasserlöslich war.

### Synthesebeispiel 6: Copolymer basierend auf einem hydrophoben hyperverzweigten Polyharnstoff-Kern (A.2) und einem kammartigen PMMA-co-PS-co-PEGMEMA-Copolymer, Funktionalisierungsgrad 100% (A.6)

Stufe 1 (A.6a): 250,0 g Tetrahydrofuran wurden unter Stickstoff vorgelegt und anschließend unter Rückfluss erhitzt. Innerhalb von 2 h wurde ein Gemisch 1 aus 117,1 g Methylmethacrylat, 44,8 g Styrol und 315,7 g PEGMEMA 1100 sowie zeitgleich innerhalb von 4 h ein Gemisch 2 aus 5,4 g AIBN und 17,0 g Mercaptoethanol, gelöst in 250,0 g THF, mit Hilfe zweier Dosierpumpen langsam dem Ansatz zugeführt. Nach beendeter Zugabe des Gemischs 2 wurde die Reaktionsmischung weitere 16 h unter Rückfluss erhitzt. Nachfolgende Kontrolle der Restmonomere mittels GC ergab einen Anteil an MMA von <1 %, so dass der Ansatz abgekühlt und das Produkt A.6a (Mn = 2200 g/mol) direkt weiter in Stufe 2 eingesetzt wurde.

Stufe 2 (A.6b): 200,0 g des Reaktionsgemischs A.6a wurden vorgelegt und im Vakuum vom Lösungsmittel THF befreit. Nach dem Abkülen auf Raumtemperatur wurde der Ansatz unter Stickstoff gesetzt und der Rückstand in 97,0 g Butylacetat gelöst. Nun wurden 8,78 g Isophorondiisocyanat zugegeben und das Gemisch auf 50 °C erhitzt. Durch Zugabe von 10 mg Zink-neodecanoat gelöst in 1 mL Butylacetat, wurde die Reaktion gestartet und im Verlauf von insgesamt 14 h bei 50 °C bis auf einen NCO-Gehalt von 0,71 % gefahren. Anschließend wurde die Reaktion durch Abkühlen auf -20 °C beendet. Das Umsetzungsprodukt A.6b wurde ohne weitere Aufarbeitung direkt in Stufe 3 eingesetzt.

Stufe 3 (A.6): 3,0 g des Polyharnstoff-Kerns A.2 wurden vorgelegt und unter Stickstoff in 27,0 g iso-Butanol gelöst. Nun wurde der Ansatz mit 9,0 g des Reaktionsgemischs A.6b versetzt und 48 Stunden bei 25 °C gerührt. Nach dem vollständigen Umsatz aller NCO-Gruppen (NCO-Gehalt 0 %) wurde das Lösungsmittel im Vakuum entfernt. Schließlich wurde das linear-dendritische Copolymer A.6 (Mn = 7120 g/mol) in Form einer gelb gefärbten, hoch viskosen Flüssigkeit erhalten, welche vollständig wasserlöslich war.

### Synthesebeispiel 7: Copolymer basierend auf einem hydrophoben hyperverzweigten Polyharnstoff-Kern (A.3) und einem kammartigen PVP-co-PLaurylacrylat-co-PEGMEMA-Copolymer, Funktionalisierungsgrad 100% (A.7)

Stufe 1 (A.7a): 100,0 g Tetrahydrofuran wurden unter Stickstoff vorgelegt und anschließend unter Rückfluss erhitzt. Innerhalb von 3 h wurde ein Gemisch 1 aus 155,9 g Laurylacrylat, 144,2 g N-Vinylpyrrolidon und 163,3 g PEGMEMA 475, gelöst in 200,0 g THF, sowie zeitgleich innerhalb von 4 h ein Gemisch 2 aus 8,8 g AIBN und 27,8 g Mercaptoethanol, gelöst in 200,0 g THF, mit Hilfe zweier Dosierpumpen langsam dem Ansatz zugeführt. Nach beendeter Zugabe des Gemischs 2 wurde die Reaktionsmischung weitere 18 h unter Rückfluss erhitzt. Nachfolgende Kontrolle der Restmonomere mittels GC ergab einen Anteil an Laurylacrylat von <1 %, so dass der Ansatz abgekühlt und das Produkt A.7a (Mn = 1000 g/mol) direkt weiter in Stufe 2 eingesetzt wurde.

Stufe 2 (A.7b): 278,4 g des Reaktionsgemischs A.7a wurden vorgelegt und im Vakuum vom Lösungsmittel THF befreit. Nach dem Abkülen auf Raumtemperatur wurde der Ansatz unter Stickstoff gesetzt und der Rückstand in 140,0 g Butylacetat gelöst. Nun wurden 20,0 g Isophorondiisocyanat zugegeben und das Gemisch auf 50 °C erhitzt. Durch Zugabe von 21 mg Zink-neodecanoat gelöst in 1 mL Butylacetat, wurde die Reaktion gestartet und imVerlauf von insgesamt ca. 12 h bei 50 °C bis auf einen NCO-Gehalt von 1,06 % gefahren. Anschließend wurde die Reaktion durch Abkühlen auf -20 °C beendet. Das Umsetzungsprodukt A.7b wurde ohne weitere Aufarbeitung direkt in Stufe 3 eingesetzt.

Stufe 3 (A.7): 2,0 g des Polyharnstoff-Kerns A.3 wurden vorgelegt und unter Stickstoff in 18,0 g iso-Butanol gelöst. Nun wurde der Ansatz mit 7,9 g des Reaktionsgemischs A.7b versetzt und zunächst 17 Stunden bei 25 °C und nachfolgend 6 Stunden bei 80 °C gerührt. Nach dem vollständigen Umsatz aller NCO-Gruppen (NCO-Gehalt 0 %) wurde der Ansatz abgekühlt und das Lösungsmittel im Vakuum entfernt. Schließlich wurde das linear-dendritische Copolymer A.7 (Mn = 5660 g/mol) in Form einer gelb gefärbten, hoch viskosen Flüssigkeit erhalten, welche vollständig wasserlöslich war.

### Synthesebeispiel 8: Copolymer basierend auf einem hydrophoben hyperverzweigten Polyharnstoff-Kern (A.4) und einem linearen PEG-b-Polycaprolacton Blockcopolymer, Funktionalisierungsgrad 100% (A.8)

Stufe 1 (A.8a): 150,0 g Polyethylenglykolmonomethylether (Mn = 500 g/mol) wurden vorgelegt und im Vakuum bei 90 °C von Wasserresten befreit. Nach dem Abkülen auf Raumtemperatur wurde der Ansatz unter Stickstoff gesetzt und mit 205,0 g ε-Caprolacton versetzt. Das Gemisch wurde auf 90 °C erwärmt und die ringöffnende Polymerisation des Caprolactons durch Zugabe von 355 mg Butylzinn-tris(2-ethylhexanoat) gestartet. Der Ansatz wurde weitere 18 h bei 90 °C erhitzt und nach beendeter Reaktion auf Raumtemperatur abgekühlt. Das so erhaltene, OH-terminierte Blockcopolymer A.8a (Mn = 1180 g/mol) wurde ohne weitere Aufreinigung direkt in Stufe 2 eingesetzt. Stufe 2 (A.8b): 200,0 g des Blockcopolymers A.8a wurden vorgelegt, unter Stickstoff gesetzt und mit 34,1 g Isophorondiisocyanat versetzt. Das Gemisch wurde auf 50 °C erhitzt. Durch Zugabe von 30 mg Zink-neodecanoat gelöst in 1 mL Butylacetat, wurde die Reaktion gestartet und im Verlauf von 4 h bei 50 °C bis auf einen NCO-Gehalt von 2,23 % gefahren. Anschließend wurde die Reaktion durch Abkühlen auf -20 °C beendet. Das Umsetzungsprodukt A.8b wurde ohne weitere Aufarbeitung direkt in Stufe 3 eingesetzt.

Stufe 3 (A.8): 18,0 g des Polyharnstoff-Kerns A.4 wurden vorgelegt und unter Stickstoff in 72,0 g iso-Butanol gelöst. Nun wurde der Ansatz mit 20,0 g des Reaktionsgemischs A.8b versetzt und zunächst 16 Stunden bei 25 °C und nachfolgend 4 Stunden bei 80 °C gerührt. Nach dem vollständigen Umsatz aller NCO-Gruppen (NCO-Gehalt 0 %) wurde der Ansatz abgekühlt und das Lösungsmittel im Vakuum entfernt. Schließlich wurde das linear-dendritische Copolymer A.8 (Mn = 4020 g/mol) in Form einer gelb gefärbten, hoch viskosen Flüssigkeit erhalten, welche vollständig wasserlöslich war.

### Solubilisierungsexperimente:

Die Wellenlängen der UV-spektroskopischen Messungen (falls anwendbar) sind in Tabelle 1 zusammengestellt.

**Tabelle 1:**

| Zu lösende Verbindung | Wellenlänge der UV-Messung [nm] |
|---|---|
| Piroxicam | 356 |
| Carbamazepin | 286 |
| Estradiol | 282 |
| Clotrimazol | HPLC-Analytik |
| Pyren | 334 |
| Pyraclostrobin | 277 |
| Fipronil | 280 |

Allgemeine Arbeitsvorschrift 1 für Solubilisierungsexperimente mit Piroxicam, Carbamazepin, Estradiol und Clotrimazol: In einem 50 mL Becherglas wurden ca. 2 g Polymer eingewogen. Anschließend wurde dem Ansatz jeweils 0,2 g Wirkstoff zugewogen, um eine übersättigte Lösung zu erhalten. Nun wurde soviel Phosphatpuffer pH 7,0 zugegeben, dass ein Masseverhältnis Polymer : Phosphatpuffer von 1 : 9 vorlag. Das Gemisch wurde nun 72 h bei Raumtemperatur mit Hilfe eines Magnetrührers gerührt. Nach einstündiger Ruhezeit wurde nicht solubilisierter Wirkstoff durch Filtration abgetrennt. Die so erhaltene, klare oder opake Lösung wurde anschließend auf ihren Wirkstoffgehalt mittels UV-Spektroskopie oder HPLC untersucht.

**Tabelle 2:**

| Löslichkeit [mg/l] in Gegenwart von | Piroxicam | Carbamazepin | Estradiol | Clotrimazol |
|---|---|---|---|---|
| Ohne Polymer^{a)} | 420 | 140 | <100 | <100 |
| Polymer A.5 | 11480 | 1550 | 2840 | 2080 |
| Polymer A.6 | 8100 | 1640 | 1650 | 2070 |

| | | | | |
|---|---|---|---|---|
| a) nicht erfindungsgemäß | | | | |

Allgemeine Arbeitsvorschrift 2 für Solubilisierungsexperimente mit Pyren, Pyraclostrobin und Fipronil: In einem 50 mL Becherglas wurden ca. 100 mg Polymer eingewogen und in 9,900 g dest. Wasser gelöst. Anschließend wurde dem Ansatz jeweils 100 mg Wirkstoff zugewogen, um eine übersättigte Lösung zu erhalten. Das Gemisch wurde nun 24 h bei Raumtemperatur mit Hilfe eines Magnetrührers gerührt. Nach einstündiger Ruhezeit wurde nicht solubilisierter Wirkstoff durch Zentrifugieren abgetrennt. Die so erhaltene, klare oder opake Lösung wurde anschließend auf ihren Wirkstoffgehalt mittels UV-Spektroskopie untersucht

**Tabelle 3:**

| Löslichkeit [mg/l] in Gegenwart von | Pyren | Fipronil |
|---|---|---|
| Ohne Polymer^{a)} | 0,1 | 3 |
| Polymer A.5 | 168 | 456 |
| Polymer A.6 | 149 | 257 |
| Polymer A.7 | 202 | 575 |
| Polymer A.8 | 263 | 767 |

| | | |
|---|---|---|
| a) nicht erfindungsgemäß | | |

### Vergleich der Solubilisierungseigenschaften von Kern, Schale, Kern/Schale-Blend und erfindungsgemäßem Copolymer

Die Löslichkeit wurde wie in der Arbeitsvorschrift 2 beschrieben bestimmt.

**Tabelle 4a:**

| Löslichkeit [mg/l] in Gegenwart von | Pyren | Fipronil | Wasserlöslichkeit des Polymers |
|---|---|---|---|
| Ohne Polymer ^{a)} | 0,1 | 3 | - |
| Polymer A.5 | 168 | 456 | Ja |
| Polymer A.1 (nur Kern) ^{a)} | - | - | Nein |
| PEG-monomethylether (nur Schale) ^{a)} | 3 | 6 | Ja |
| Polymer A.1 + PEG-monomethylether (Mischung aus Kern + Schale) ^{a)} | - | - | Nein (ungelöste Anteile) |

| | | | |
|---|---|---|---|
| a) nicht erfindungsgemäß | | | |

Tabelle 4a zeigt, dass der erfindungsgemäße Polyharnstoff A.5 (A.1 funktionalisiert mit PEG-monomethylether) höhrere Solubilisierungskapazitäten aufweist als die einzelnen Bestandteile, d.h. als das Kernpolymer (A.1), als das Schalenpolymer (PEG-monomethylether) oder als die Mischung (d.h. keine kovalente Verknüpfung) von Kernpolymer und Schalenpolymer.

**Tabelle 4b:**

| Löslichkeit [mg/l] in Gegenwart von | Pyren | Fipronil | Wasserlöslichkeit des Polymers |
|---|---|---|---|
| Ohne Polymer ^{a)} | 0,1 | 3 | - |
| Polymer A.7 | 202 | 575 | Ja |
| Polymer A.3 (nur Kern) ^{a)} | - | - | Nein |
| Polymer A.7a (nur Schale) ^{a)} | 171 | 366 | Ja |
| Polymer A.3 + Polymer A.8a (Mischung aus Kern + Schale) ^{a)} | - | - | Nein (ungelöste Anteile) |

| | | | |
|---|---|---|---|
| a) nicht erfindungsgemäß | | | |

Tabelle 4b zeigt, dass das erfindungsgemäße Polyharnstoff A.7 (A.3 funktionalisiert mit A.7a) höhere Solubilisierungskapazitäten aufweist als die einzelnen Bestandteile, d.h. als das Kernpolymer (A.3), das Schalenpolymer (Polymer A.7a) oder die Mischung (d.h. keine kovalente Verknüpfung) von Kernpolymer und Schalenpolymer.

## Patentansprüche

1. Zusammensetzung enthaltend ein Amphiphil und einen Wirkstoff, der in Wasser bei 20 °C zu höchstens 10 g/L löslich ist, **dadurch gekennzeichnet, dass** das Amphiphil einen dendritischen Polyharnstoff enthält, der verknüpft ist mit mindestens einem linearen oder Kamm-förmigen Polymer, und die Verknüpfung über einen difunktionellen Linker erfolgt, falls die Wiederholungseinheiten des linearen Polymers aus polymerisiertem Alkylenoxid bestehen.

2. Zusammensetzung nach Anspruch 1, wobei das lineare Polymer
a) ein Homopolymer oder statistisches Copolymer enthaltend ein polares, ethylenisch ungesättigtes Monomer,
b) ein Blockpolymer enthaltend einen Block aus Polyethylenglykol oder auf Basis eines polaren, ethylenisch ungesättigten Monomers, oder
c) ein Polykondensat enthaltend Polyethylenglykol, oder
d) ein Polyethylenglykol
ist, wobei das Polyethylenglykol d) über einen difunktionellen Linker mit dem Polyharnstoff vernüpft ist.

3. Zusammensetzung nach Anspruch 1 oder 2, wobei das lineare Polymer
a) ein Homopolymer oder statistisches Copolymer enthaltend ein polares, ethylenisch ungesättigtes Monomer,
b) ein Blockpolymer enthaltend einen Block aus Polyethylenglykol oder auf Basis eines polaren, ethylenisch ungesättigten Monomers, oder
c) ein Polykondensat enthaltend Polyethylenglykol, ist.

4. Zusammensetzung nach Anspruch 2 oder 3, wobei das polare, ethylenisch ungesättigte Monomer Vinylpyrrolidon, (Meth)Acrylsäure, ein Sulfonsäure-haltiges Monomer, ein Amino-funktionelles Monomer, oder ein (Meth)Acrylsäureester von einem Polyethylenglykolderivat ist.

5. Zusammensetzung nach einem der Ansprüche 1 bis 4, wobei das Kamm-förmige Polymer Polyethylenglykol-mono(meth)acrylat oder Allylalkoholalkoxylat in polymerisierter Form enthält.

6. Zusammensetzung nach einem der Ansprüche 1 bis 5, wobei der Wirkstoff ein Pestizid ist.

7. Zusammensetzung nach einem der Ansprüche 1 bis 6, wobei der dendritische Polyharnstoff bevorzugt ein hyperverzweigter Polyharnstoff ist.

8. Zusammensetzung nach Anspruch 7, wobei der hyperverzweigte Polyharnstoff erhältlich durch ein Verfahren umfassend die Umsetzung eines mindestens difunktionellen blockierten Di- oder Polyisocyanats mit mindestens einem mindestens difunktionellen primären und/oder sekundären Amin unter Eliminierung des Blockierungsmittels.

9. Zusammensetzung nach einem der Ansprüche 1 bis 7, **dadurch gekennzeichnet, dass** das Blockierungsmittel ein Monoalkohol ist.

10. Amphiphil enthaltend einen dendritischen Polyharnstoff, **dadurch gekennzeichnet, dass** der dendritische Polyharnstoff verknüpft ist mit mindestens einem linearen oder Kamm-förmigen Polymer, und die Verknüpfung über einen difunktionellen Linker erfolgt, falls die Wiederholungseinheiten des linearen Polymers aus polymerisiertem Alkylenoxid bestehen.

11. Amphiphil nach Anspruch 10, wobei das lineare Polymer
a) ein Homopolymer oder statistisches Copolymer enthaltend ein polares, ethylenisch ungesättigtes Monomer,
b) ein Blockpolymer enthaltend einen Block aus Polyethylenglykol oder auf Basis eines polaren, ethylenisch ungesättigten Monomers,
c) ein Polykondensat enthaltend Polyethylenglykol, oder
d) ein Polyethylenglykol
ist, wobei das Polyethylenglykol d) über einen difunktionellen Linker mit dem Polyharnstoff verknüpft ist.

12. Amphiphil nach Anspruch 10 oder 11, wobei das Kamm-förmige Polymer Polyethylenglykol-mono(meth)acrylat in polymerisierter Form enthält.

13. Amphiphil nach einem der Ansprüche 10 bis 12, wobei der dendritische Polyharnstoff bevorzugt ein hyperverzweigter Polyharnstoff ist.

14. Amphiphil nach Anspruch 13, wobei der hyperverzweigte Polyharnstoff erhältlich ist durch ein Verfahren umfassend die Umsetzung eines mindestens difunktionellen blockierten Di- oder Polyisocyanats mit mindestens einem mindestens difunktionellen primären und/oder sekundären Amin unter Eliminierung des Blockierungsmittels.

15. Amphiphil nach Anspruch 13 oder 14, wobei als Di- oder Polyisocyanats ein Oligo-oder Polyisocyanat verwendet wird mit einer mittleren Molmasse von 300 bis 3000 g/mol.

16. Verfahren zur Herstellung des Amphiphils gemäß einem der Ansprüche 10 bis 15, indem man
a) den dendritischen Polyharnstoff mit dem linearen oder Kamm-förmigen Polymer umsetzt, oder
b) den dendritischen Polyharnstoff mit einem Monomer umsetzt, das durch Ringöffnende Polymersiation einen Teil des linearen oder Kamm-förmigen Polymers bilden kann.

17. Verfahren zur Herstellung der Zusammensetzung gemäß einem der Ansprüche 1 bis 9, indem man das Amphiphil und den Wirkstoff in Kontakt bringt.

## Claims

1. A composition comprising an amphiphile and an active ingredient whose solubility in water at 20°C is not more than 10 g/L, wherein the amphiphile comprises a dendritic polyurea which is joined to at least one linear or comb-type polymer, and the joining is effected via a difunctional linker, if the repeat units of the linear polymer are composed of polymerized alkylene oxide.

2. The composition according to claim 1, wherein the linear polymer is
a) a homopolymer or random copolymer comprising a polar ethylenically unsaturated monomer,
b) a block polymer comprising a block of polyethylene glycol or based on a polar ethylenically unsaturated monomer, or
c) a polycondensate comprising polyethylene glycol, or
d) a polyethylene glycol,
the polyethylene glycol d) being joined to the polyurea via a difunctional linker.

3. The composition according to claim 1 or 2, wherein the linear polymer is
a) a homopolymer or random copolymer comprising a polar ethylenically unsaturated monomer,
b) a block polymer comprising a block of polyethylene glycol or based on a polar ethylenically unsaturated monomer, or
c) a polycondensate comprising polyethylene glycol.

4. The composition according to claim 2 or 3, wherein the polar ethylenically unsaturated monomer is vinylpyrrolidone, (meth)acrylic acid, a sulfocontaining monomer, an amino-functional monomer or a (meth)acrylic ester of a polyethylene glycol derivative.

5. The composition according to any of claims 1 to 4, wherein the comb-type polymer comprises polyethylene glycol mono(meth)acrylate or allyl alcohol alkoxylate in polymerized form.

6. The composition according to any of claims 1 to 5, wherein the active ingredient is a pesticide.

7. The composition according to any of claims 1 to 6, wherein the dendritic polyurea is preferably a hyperbranched polyurea.

8. The composition according to claim 7, wherein the hyperbranched polyurea is obtainable by a process comprising the reaction of an at least difunctional blocked di- or polyisocyanate with at least one at least difunctional primary and/or secondary amine, with elimination of the blocking agent.

9. The composition according to any of claims 1 to 7, wherein the blocking agent is a monoalcohol.

10. An amphiphile comprising a dendritic polyurea, wherein the dendritic polyurea is joined to at least one linear or comb-type polymer, and the joining is effected via a difunctional linker, if the repeat units of the linear polymer are composed of polymerized alkylene oxide.

11. An amphiphile according to claim 10, wherein the linear polymer is
a) a homopolymer or random copolymer comprising a polar ethylenically unsaturated monomer,
b) a block polymer comprising a block of polyethylene glycol or based on a polar ethylenically unsaturated monomer,
c) a polycondensate comprising polyethylene glycol, or
d) a polyethylene glycol,
the polyethylene glycol d) being joined to the polyurea via a difunctional linker.

12. The amphiphile according to claim 10 or 11, wherein the comb-type polymer comprises polyethylene glycol mono(meth)acrylate in polymerized form.

13. The amphiphile according to any of claims 10 to 12, wherein the dendritic polyurea is preferably a hyperbranched polyurea.

14. The amphiphile according to claim 13, wherein the hyperbranched polyurea is obtainable by a process comprising the reaction of an at least difunctional blocked di- or polyisocyanate with at least one at least difunctional primary and/or secondary amine, with elimination of the blocking agent.

15. The amphiphile according to claim 13 or 14, wherein said di- or polyisocyanate used is an oligo- or polyisocyanate having an average molar mass of 300 to 3000 g/mol.

16. A process for preparing the amphiphile according to any of claims 10 to 15, by
a) reacting the dendritic polyurea with the linear or comb-type polymer, or
b) reacting the dendritic polyurea with a monomer which by ring-opening polymerization is able to form part of the linear or comb-type polymer.

17. A process for preparing the composition according to any of claims 1 to 9, by contacting the amphiphile and the active ingredient.

## Revendications

1. Composition contenant un amphiphile et un agent actif, qui est soluble dans l'eau à 20 °C à hauteur d'au plus 10 g/l, **caractérisée en ce que** l'amphiphile contient une polyurée dendritique, qui est reliée avec au moins un polymère linéaire ou en forme de peigne, et la liaison a lieu par le biais d'un lieur bifonctionnel si les unités de répétition du polymère linéaire sont constituées d'oxyde d'alkylène polymérisé.

2. Composition selon la revendication 1, dans laquelle le polymère linéaire est
a) un homopolymère ou un copolymère statistique contenant un monomère éthyléniquement insaturé polaire,
b) un polymère séquencé contenant une séquence de polyéthylène glycol ou à base d'un monomère éthyléniquement insaturé polaire ou
c) un polycondensat contenant un polyéthylène glycol ou
d) un polyéthylène glycol,
le polyéthylène glycol d) étant relié par un lieur bifonctionnel avec la polyurée.

3. Composition selon la revendication 1 ou 2, dans laquelle le polymère linéaire est
a) un homopolymère ou un copolymère statistique contenant un monomère éthyléniquement insaturé polaire,
b) un polymère séquencé contenant une séquence de polyéthylène glycol ou à base d'un monomère éthyléniquement insaturé polaire, ou
c) un polycondensat contenant un polyéthylène glycol.

4. Composition selon la revendication 2 ou 3, dans laquelle le monomère éthyléniquement insaturé polaire est la vinylpyrrolidone, l'acide (méth)acrylique, un monomère contenant de l'acide sulfonique, un monomère à fonction amino ou un ester de l'acide (méth)acrylique d'un dérivé de polyéthylène glycol.

5. Composition selon l'une quelconque des revendications 1 à 4, **caractérisée en ce que** le polymère en forme de peigne contient un mono(méth)acrylate de polyéthylène glycol ou un alcoxylate d'alcool allylique sous forme polymérisée.

6. Composition selon l'une quelconque des revendications 1 à 5, dans laquelle l'agent actif est un pesticide.

7. Composition selon l'une quelconque des revendications 1 à 6, dans laquelle la polyurée dendritique est de préférence une polyurée hyperramifiée.

8. Composition selon la revendication 7, dans laquelle la polyurée hyperramifiée peut être obtenue par un procédé comprenant la mise en réaction d'un diou polyisocyanate bloqué au moins bifonctionnel avec au moins une amine primaire et/ou secondaire au moins bifonctionnelle avec élimination de l'agent de blocage.

9. Composition selon l'une quelconque des revendications 1 à 7, **caractérisée en ce que** l'agent de blocage est un monoalcool.

10. Amphiphile contenant une polyurée dendritique, **caractérisé en ce que** la polyurée dendritique est reliée avec au moins un polymère linéaire ou en forme de peigne et la liaison a lieu par le biais d'un lieur bifonctionnel si les unités de répétition du polymère linéaire sont constituées d'oxyde d'alkylène polymérisé.

11. Amphiphile selon la revendication 10, dans lequel le polymère linéaire est
a) un homopolymère ou un copolymère statistique contenant un monomère éthyléniquement insaturé polaire,
b) un polymère séquencé contenant une séquence de polyéthylène glycol ou à base d'un monomère éthyléniquement insaturé polaire ou
c) un polycondensat contenant un polyéthylène glycol ou
d) un polyéthylène glycol,
le polyéthylène glycol d) étant relié par un lieur bifonctionnel avec la polyurée.

12. Amphiphile selon la revendication 10 ou 11, dans lequel le polymère en forme de peigne contient un mono(méth)acrylate de polyéthylène glycol sous forme polymérisée.

13. Amphiphile selon l'une quelconque des revendications 10 à 12, dans lequel la polyurée dendritique est de préférence une polyurée hyperramifiée.

14. Amphiphile selon la revendication 13, dans lequel la polyurée hyperramifiée peut être obtenue par un procédé comprenant la mise en réaction d'un di- ou polyisocyanate bloqué au moins bifonctionnel avec au moins une amine primaire et/ou secondaire au moins bifonctionnelle avec élimination de l'agent de blocage.

15. Amphiphile selon la revendication 13 ou 14, dans lequel un oligo- ou polyisocyanate d'une masse molaire moyenne de 300 à 3 000 g/mol est utilisé en tant que di- ou polyisocyanate.

16. Procédé de fabrication de l'amphiphile selon l'une quelconque des revendications 10 à 15 par
a) mise en réaction de la polyurée dendritique avec le polymère linéaire ou en forme de peigne ou
b) mise en réaction de la polyurée dendritique avec un monomère qui peut former par polymérisation par ouverture de cycle une partie du polymère linéaire ou en forme de peigne.

17. Procédé de fabrication de la composition selon l'une quelconque des revendications 1 à 9, par mise en contact de l'amphiphile et de l'agent actif.
